# EUROPÄISCHE PATENTSCHRIFT

(11) **EP 3 160 779 B1**
(45) Veröffentlichungstag und Bekanntmachung des Hinweises auf die Patenterteilung: **15.08.2018**
(21) Anmeldenummer: 15730396.7
(22) Anmeldetag: 16.06.2015
(51) Int. Cl.: B60G 17/052, F04B 49/06, F15B 21/00, F15B 21/04, B60T 17/02

(54) **DRUCKLUFTVERSORGUNGSANLAGE, PNEUMATISCHES SYSTEM UND VERFAHREN ZUM STEUERN EINER DRUCKLUFTVERSORGUNGSANLAGE**
COMPRESSED-AIR SUPPLY INSTALLATION, PNEUMATIC SYSTEM, AND METHOD FOR CONTROLLING A COMPRESSED-AIR SUPPLY INSTALLATION
INSTALLATION D'ALIMENTATION EN AIR COMPRIMÉ, SYSTÈME PNEUMATIQUE ET PROCÉDÉ DE COMMANDE D'UNE INSTALLATION D'ALIMENTATION EN AIR COMPRIMÉ

(30) Priorität: 25.06.2014 DE 102014009419
(43) Veröffentlichungstag der Anmeldung: 03.05.2017
(73) Patentinhaber: WABCO GmbH, 30453 Hannover (DE)
(72) Erfinder: FRANK, Dieter, 30171 Hannover (DE); MEISSNER, Frank, 30453 Hannover (DE); STABENOW, Uwe, 30880 Laatzen (DE)
(74) Vertreter: Lauerwald, Jörg
(86) Internationale Anmeldenummer: PCT/EP2015/001212
(87) Internationale Veröffentlichungsnummer: WO 2015/197169

(56) Entgegenhaltungen:
- EP-B2- 1 165 333
- WO-A1-2012/079688
- WO-A1-2012/079691
- DE-A1- 3 233 545
- DE-A1- 3 542 974
- DE-A1- 3 919 438
- DE-A1-102010 024 476
- DE-A1-102012 005 305
- DE-C1- 19 724 747
- JP-A- H0 450 020

## Beschreibung

Die Erfindung betrifft eine Druckluftversorgungsanlage gemäß dem Oberbegriff des Anspruchs 1. Weiter betrifft die Erfindung ein pneumatisches System sowie ein Verfahren zum Steuern einer Druckluftversorgungsanlage, insbesondere zum Betreiben einer Pneumatikanlage.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbalgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Solche Systeme werden in Geländefahrzeugen und Sport Utility Vehicles (SUV) eingesetzt. Insbesondere bei SUVs ist es bei sehr leistungsfähigen Motoren wünschenswert das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.

Eine Druckluftversorgungsanlage zur Verwendung in einem pneumatischen System mit einer Pneumatikanlage, beispielsweise einer zuvor beschriebenen Luftfederanlage, wird mit Druckluft aus einer Druckluftzuführung, beispielsweise im Rahmen eines Druckniveaus von 5 bis 20 bar, betrieben. Die Druckluft wird mit einem Luftverdichter (Kompressor) der Druckluftzuführung zur Verfügung gestellt. Die Druckluftzuführung ist zur Versorgung der Pneumatikanlage mit einem Druckluftanschluss pneumatisch verbunden und andererseits mit einem Entlüftungsanschluss pneumatisch verbunden. Über eine Entlüftungsventilanordnung kann durch Ablassen von Luft die Druckluftversorgungsanlage zum Entlüftungsanschluss hin entlüftet werden.

Zur Sicherstellung eines langfristigen Betriebs der Druckluftversorgungsanlage weist diese einen Lufttrockner auf, mit dem die Druckluft zu trocknen ist. Dadurch wird die Ansammlung von Feuchtigkeit im Pneumatiksystem vermieden, was bei vergleichsweise niedrigen Temperaturen zu ventilschädigender Kristallbildung führen kann und ansonsten zu ungewünschten Defekten in der Druckluftversorgungsanlage und in der Pneumatikanlage führen kann. Ein Lufttrockner weist ein Trockenmittel auf, üblicherweise eine Granulatschüttung, welche von der Druckluft durchströmbar ist, so dass die Granulatschüttung --bei vergleichsweise hohem Druck-- in der Druckluft enthaltene Feuchtigkeit durch Adsorption aufnehmen kann. Ein Lufttrockner kann gegebenenfalls als regenerativer Lufttrockner ausgebildet werden. Dies kann dadurch geschehen, dass die Granulatschüttung bei jedem Entlüftungszyklus - bei vergleichsweise niedrigem Druck - mit der getrockneten Druckluft aus dem Luftfederungssystem im Gegenstrom oder Gleichstrom relativ zur Befüllrichtung durchströmt werden. Dazu kann die Entlüftungsventilanordnung geöffnet werden. Für eine solche - auch als Druckwechseladsorption bezeichnete - Anwendung hat es sich als wünschenswert erwiesen, eine Druckluftversorgungsanlage flexibel und gleichzeitig verlässlich auszulegen, insbesondere eine vergleichsweise schnelle Entlüftung mit einem dennoch für eine Regeneration des Lufttrockners ausreichendem Druckwechsel, zu ermöglichen.

Aus DE 35 429 74 A1 der Anmelderin ist eine eingangs genannte Druckluftversorgungsanlage für eine Niveauregeleinrichtung für Fahrzeuge mit Luftfedern bekannt, mit der in Abhängigkeit von der Fahrzeugbelastung ein vorgegebener Abstand der Fahrzeugzelle von der Fahrzeugachse durch Auffüllen oder Entleeren der Luftfedern aufrechterhalten werden kann. Die Einrichtung enthält ein stromlos geschlossenes Magnetentlüftungsventil und ein mit dem Druck in den Luftfedern steuerbares Sicherheitsventil. Eine solche Druckluftversorgungsanlage ist noch verbesserbar.

Eine eingangs genannte Druckluftversorgungsanlage ist auch in EP 1 165 333 B2 im Rahmen eines eingangs genannten pneumatischen Systems mit einer Luftfederanlage offenbart. Diese weist neben einer separat absperrbaren Hauptentlüftungsleitung eine Hochdruckentlüftungsleitung auf, die mit einem zusätzlichen Hochdruckentlüftungsventil neben dem mit einem Steuerventil pneumatisch angesteuerten Hauptentlüftungsventil in der Hauptentlüftungsleitung auf und die zur Hauptentlüftungsleitung parallel geschaltet ist. Der freie Durchströmquerschnitt des separaten Hochdruckentlüftungsventils ist geringer als derjenige des Hauptentlüftungsventils. Eine solche Druckluftversorgungsanlage ist noch verbesserbar. Es hat sich gezeigt, dass bei Entlüftung einer solchen Druckluftversorgungsanlage über die Hochdruckentlüftungsleitung die Entlüftung von trockener Luft erfolgt, welche nicht für die Regeneration des Trockenmittels verwendet wird. Dies kommt einer unnötigen Verschwendung von trockener Luft gleich, insbesondere für den Fall, dass eine für obige Anwendungen geeignete, flexible, schnelle und dennoch verlässliche Betätigung der Druckluftversorgungsanlage mit entsprechend hoher Betätigungsrate erforderlich sein sollte.

Alle vorgenannten Lösungen sehen bei der Entlüftungsventilanordnung in Form einer steuerbaren Magnetventilanordnung vor, dass bei einem nicht angesteuerten Zustand des Magnetteils der Pneumatikteil der Magnetventilanordnung geschlossen ist; d. h. die Lösungen sehen eine stromlos geschlossene Magnetventilanordnung vor. Insbesondere hinsichtlich der in DE 35 42 974 A1 genannten Lösung hat sich gezeigt, dass eine stromlos geschlossene Magnetentlüftungsventilanordnung nachteilig sein kann, da häufig ein zusätzliches Druckbegrenzungs- oder Sicherheitsventil vorgesehen werden muss, um eine zuverlässige Funktion zu gewährleisten. Da im stromlos geschlossenen Zustand ein Relaisventil der Magnetventilanordnung geschlossen ist, kann dies in Einzelfällen dazu führen, dass ein Ventilkörper am Ventilsitz haftet und gegebenenfalls die Schaltfunktion des Relaisventils der Magnetventilanordnung nicht zuverlässig gewährleistet ist.

Wünschenswert wäre es, eine Druckluftversorgungsanlage mit einer Ventilanordnung zur Entlüftung und einem Lufttrockner möglichst einfach jedoch dennoch verlässlich einzurichten.

DE 39 19 438 C2 offenbart eine Druckluftversorgungsanlage, bei welcher der Lufttrockner über eine elektrisch betätigbare Ventileinrichtung mit einem Auslass zur Atmosphäre verbindbar ist. Die Ventileinrichtung weist einen elektrischen Steuereingang auf, der über eine elektrische Leitung mit einem elektrischen Steuerausgang mit einer elektronischen Steuereinrichtung verbunden ist; im nicht angesteuerten Zustand ist die Ventileinrichtung offen. Zum Auffüllen einer Luftfeder nimmt die Ventileinrichtung eine Schalteinstellung ein, in der die Verbindung des Lufttrockners mit dem Auslass zur Atmosphäre unterbrochen ist. DE 197 24 747 C1 offenbart eine Niveauregeleinrichtung für Fahrzeuge mit Luftfedern, wobei ein pneumatisch steuerbares Wegeventil in der pneumatischen Hauptleitung zur Schaltung über eine Steuerleitung vorgesehen ist mit einem vom Kompressor erzeugten Luftsteuerdruck. Die Steuerleitung kann über ein weiteres Wegeventil mit der Atmosphäre verbunden werden, sodass bei nicht laufendem Kompressor das Wegeventil in der pneumatischen Hauptleitung von dem einen Schaltzustand, der den Kompressor mit dem Lufttrockner verbindet, in den anderen Schaltzustand, der den Lufttrockner mit der Atmosphäre verbindet, übergehen kann.

DE 10 2010 024476 A der Anmelderin offenbart eine Druckluftsteuerungseinrichtung mit einem Entlüftungsventil (42), das mittelbar eines weiteren Kompressor-gesteuerten Ventils (14) gesteuert wird.

Auch diese Druckluftversorgungsanlagen sind noch verbesserbar.

An dieser Stelle setzt die Erfindung an, deren Aufgabe es ist, eine Vorrichtung und ein Verfahren anzugeben, welche im Hinblick auf den Stand der Technik verbessert sind. Insbesondere soll eine alternative Lösung zum Stand der Technik angegeben werden, welche die mit einem unangesteuert geschlossenen Entlüftungsventil verbundenen Nachteile grundsätzlich vermeidet. Insbesondere soll eine Entlüftungs- und/oder Trockenleistung der Druckluftversorgungsanlage verbessert sein, wobei die Druckluftversorgungsanlage dennoch vergleichsweise einfach und kompakt aufbaubar sein soll. Insbesondere sollen grundsätzlich bestehende technischen Umwägbarkeiten hinsichtlich einer Magnetventilanordnung behoben werden. Insbesondere soll ein Pneumatikteil eines Entlüftungsventils vergleichsweise verlässlich funktionstüchtig sein und dennoch einfach ansteuerbar sein.

Die Aufgabe hinsichtlich der Vorrichtung wird gelöst durch eine Druckluftversorgungsanlage der eingangs genannten Art, bei der erfindungsgemäß die Merkmale des kennzeichnenden Teils des Anspruchs 1 vorgesehen sind. Die Aufgabe führt auf ein pneumatisches System des Anspruchs 20. Die Aufgabe hinsichtlich des Verfahrens wird gelöst durch ein erfindungsgemäßes Verfahren des Anspruchs 21.

Die Erfindung geht aus von einer Druckluftversorgungsanlage zum Betreiben einer Pneumatikanlage, insbesondere einer Luftfederanlage eines Fahrzeugs, aufweisend:
- eine Luftzuführung mit einem Luftverdichter zur Versorgung einer Druckluftzuführung mit Druckluft,
- eine pneumatische Hauptleitung, mit einem Lufttrockner und einem Druckluftanschluss zur Versorgung der Pneumatikanlage mit Druckluft,
- eine Entlüftungsleitung, insbesondere eine von der pneumatische Hauptleitung an der Druckluftzuführung abzweigende Entlüftungsleitung, aufweisend ein in der Entlüftungsleitung angeschlossenes Entlüftungsventil und einen Entlüftungsanschluss zum Ablassen von Luft zur Umgebung, wobei das Entlüftungsventil Teil einer steuerbaren Ventilanordnung ist. Erfindungsgemäß ist vorgesehen, dass das Entlüftungsventil mit einem vom Luftverdichter abgeleiteten Steuerdruck unmittelbar pneumatisch beaufschlagbar ist. Erfindungsgemäß ist die Ventilanordnung mit wenigstens dem Entlüftungsventil mit einem vom Luftverdichter abgeleiteten Steuerdruck unmittelbar pneumatisch beaufschlagbar.
Die Erfindung geht von der Überlegung aus, dass mittels einer pneumatisch steuernd beaufschlagbaren Ventilanordnung grundsätzliche Anfälligkeiten einer Magnetventilanordnung behoben werden können. So entfallen bei pneumatisch steuernd beaufschlagbaren Ventilanordnungen grundsätzliche Anfälligkeiten gegenüber elektrischen Störungen oder auch Kabelbruch, Kontaktprobleme oder dergleichen; insbesondere hat eine Ventilanordnung mit pneumatischer steuernder Beaufschlagung keinen Stromverbrauch. Insgesamt basiert das Konzept der Erfindung, vereinfacht gesagt, auf einer Ventilanordnung, die pneumatisch steuernd beaufschlagbar ist und die ein Entlüftungsventil umfasst.. Darüber hinaus hat die Erfindung erkannt, dass sich ein Steuerdruck zur pneumatischen steuernden Beaufschlagung der Ventilanordnungvergleichsweise einfach-- bereits als Steuerdruck von einem Luftverdichter ableiten lässt; bevorzugt unmittelbar als Steuerdruck von einem Luftverdichter ableiten lässt.

Es entfallen mit dem pneumatischen Steuerkonzept nicht nur elektrische Steuerleitungen, sondern aufgrund des unmittelbar vom Luftverdichter abgeleiteten Steuerdruck sind auch pneumatische Steuerleitungen zur Beaufschlagung der Ventilanordnung vergleichsweise einfach gehalten. Das Konzept der Erfindung ist mit einem vergleichsweise einfachen Aufbau und in unmittelbarer Anbindung an den Luftverdichter realisierbar. Insgesamt wird ein verringerter Bauteil/Kosten-Aufwand gegenüber vorbekannten Lösungen und dadurch ein verringertes Ausfallrisiko erreicht; zudem eine verbesserte Bauraumausnutzung für die Druckluftversorgungsanlage. Aufgrund des vergleichsweise einfachen Konzepts ist ein effizientes und energiesparendes Konzept einer Druckluftversorgungsanlage bzw. Steuerverfahrens angegeben, das mit erhöhter Funktionssicherheit durchführbar ist.

Es ergibt sich eine Druckluftversorgungsanlage mit einer Trocknerschaltung, die einen selbstdichtenden Lufttrocknerausgang ermöglicht, wobei ein Entlüftungsmagnet entfallen kann. Die den Lufttrocknerausgang selbstdichtende Funktionalität der Ventilanordnung ergibt sich mit dem Betrieb des Luftverdichters. Erfindungsgemäß ist vorgesehen:
- Öffnen des Entlüftungsventils in nicht angesteuerten Zustand der Ventilanordnung;
- Schließen des Entlüftungsventils durch pneumatisches Beaufschlagen der Ventilanordnung über einen vom Luftverdichter, insbesondere unmittelbar, abgeleiteten Steuerdruck.

Verkürzt ausgedrückt wird eine kompressorgesteuerte Entlüftungsfunktionalität realisiert.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Im Rahmen des Verfahrens ist es bevorzugt, dass zum Öffnen des Entlüftungsventils ein Rückschlagventil, insbesondere ein in der Steuerleitung angeordnetes Rückschlagventil und/oder ein Auslassventil des Kompressors, derart statisch offen gebildet ist, dass wenn der Kompressor nicht in Betrieb ist, eine Steuerleitung in Sperrrichtung des Rückschlagventils entlüftet wird.

Im Rahmen des Verfahrens ist es weiter zusätzlich oder alternativ bevorzugt, dass zum Schließen des Entlüftungsventils ein Rückschlagventil und/oder Auslassventil, insbesondere ein in der Steuerleitung angeordnetes Rückschlagventil und/oder ein Auslassventil des Kompressors, derart dynamisch geschlossen ist, dass wenn der Kompressor in Betrieb ist, ein Steuerdruck aufrecht zu halten ist, insbesondere ein Steuerdruck aufrecht zu halten ist.

Im Rahmen einer besonders bevorzugten Weiterbildung kann im nicht-beaufschlagten Zustand der Ventilanordnung, d. h. ohne Beaufschlagung mit Steuerdruck, das Entlüftungsventil geöffnet sein. Im Rahmen einer weiteren bevorzugten Weiterbildung kann im nicht-beaufschlagten Zustand der Ventilanordnung, d. h. ohne Beaufschlagung mit Steuerdruck, das Entlüftungsventil geschlossen sein. Dauerhaft geschlossene Ventile können zwar problematisch sein, wenn z.B. ein Ventilkolben zum Kleben neigt oder am Ventilsitz anfriert, jedoch grundsätzlich sind diese auch möglich. Derartige Anfälligkeiten sind bei einem geöffneten Entlüftungsventil im nicht steuernd beaufschlagten Steuerzustand der Ventilanordnung allerdings grundsätzlich vermieden; die zuvor genannte besonders bevorzugte Weiterbildung ist jedenfalls diesbezüglich zu bevorzugen.

Das der besonders bevorzugten Funktionalität zugrunde liegende Konzept sieht im Ergebnis vor, dass bei Betrieb des Luftverdichters das Entlüftungsventil verschlossen und bei Nicht-Betrieb des Luftverdichters das Entlüftungsventil geöffnet ist. Anders ausgedrückt, wird bei Betrieb des Luftverdichters der Lufttrocknerausgang --in Folge des bei Betrieb unmittelbar abgeleiteten Steuerdrucks-- automatisch durch Schließen des Entlüftungsventils geschlossen. Umgekehrt wird bei Nicht-Betrieb des Verdichters - -und damit nicht-beaufschlagtem Zustand der Ventilanordnung-- das Entlüftungsventil, z. B. unter Federdruck einer Ventilfeder-- geöffnet und der Lufttrockner der Pneumatikhauptleitung sowie eine ggf. an die Druckluftversorgungsanlage angeschlossene Pneumatikanlage kann vollständig entlüftet werden.

Bevorzugt ist das Entlüftungsventil mit einem vom Luftverdichter unmittelbar abgeleiteten Steuerdruck pneumatisch ansteuerbar und im nicht angesteuerten Zustand des Entlüftungsventils ist das Entlüftungsventil geöffnet. Die Weiterbildung sieht vorteilhaft vor, dass der zur Beaufschlagung der Ventilanordnung vorgesehene Steuerdruck als Steuerdruck zur Ansteuerung des Entlüftungsventils genutzt wird. Bevorzugt liegt der Steuerdruck an einem Drucksteueranschluss des Entlüftungsventils an.

Insbesondere hat es sich als vorteilhaft erwiesen, dass ein Pneumatikteil des Entlüftungsventils in Form eines 2/2-Wegeventils gebildet ist. Im Rahmen einer besonders bevorzugten konkreten Weiterbildung des Konzepts ist ein pneumatisch ansteuerbares 2/2-Wegeventil als Entlüftungsventil vorgesehen, das nicht Steuerdruck-beaufschlagt offen ist. Dadurch kann ein Galeriedruck beim Entlüften passieren. Bei einem Anlauf eines Kompressors des Luftverdichters wird das Entlüftungsventil --bevorzugt in Form eines 2/2-Wegeventils-- geschlossen. Grundsätzlich kann auch ein anderes zur direkten Schaltung eines Druckluftvolumens geeignetes Entlüftungsventil vorgesehen sein, soweit dieses als Teil der Ventilanordnung mit einem vom Luftverdichter unmittelbar abgeleiteten Steuerdruck pneumatisch ansteuerbar ist.

Das Entlüftungsventil ist insbesondere zur direkten Schaltung eines Druckluftvolumens ausgebildet; vorzugsweise weist es gemäß einer besonders bevorzugten Weiterbildung in einer Entlüftungsleitung eine druckseitigen Ventilanschluss und eine entlüftungsseitigen Ventilanschluss sowie einen an eine Steuerleitung unmittelbar angeschlossenen Drucksteueranschluss auf.

Zur Darstellung eines unmittelbar vom Luftverdichter abgeleiteten Steuerdrucks hat es sich als vorteilhaft erwiesen, dass eine Steuerleitung unmittelbar an eine Verdichterkammer des Luftverdichters, insbesondere eines Kompressors derselben, angeschlossen ist. Der Luftverdichter weist bevorzugt einen Kompressor, beispielsweise einen einstufigen oder zweistufigen Kompressor auf, der die Verdichterkammer umfasst.

Im Rahmen einer besonders bevorzugten Weiterbildung ist eine Steuerleitung von einer Verdichterkammer eines Luftverdichters zu einem Drucksteueranschluss eines Entlüftungsventils in Form eines 2/2-Wegeventils geführt, wobei in nicht steuerdruckbeaufschlagtem Zustand des Drucksteueranschluss das Entlüftungsventil geöffnet ist.

Die Ventilanordnung ist im Weiteren bevorzugt ausgebildet, um ein selbsttätiges Schließen des Lufttrocknerausgangs bei einer Befüllfunktion als auch ein selbsttätiges Öffnen des Luftttrocknerausgangs zur Entlüftung des Lufttrockners als auch eine bevorzugte Entlüftung der Steuerleitung zu ermöglichen.

Im Rahmen einer besonders bevorzugten Weiterbildung weist die Ventilanordnung neben dem Entlüftungsventil ein Gegenventil mit Rückschlagfunktion und/oder eine Drossel auf. Vorzugsweise ist das Entlüftungsventil in der Entlüftungsleitung angeschlossen. Das Gegenventil mit Rückschlagfunktion ist bevorzugt in einer Parallelleitung zu einer Bypass-Leitung angeschlossen. Die Bypass-Leitung weist vorzugsweise die Drossel auf.

Im Rahmen einer besonders bevorzugten ersten Variante einer Weiterbildung ist das Gegenventil mit Rückschlagfunktion in Form eines Rückschlagventils gebildet. Das Rückschlagventil weist eine Öffnungsrichtung zur selbsttätigen druckbeaufschlagten Öffnung auf und eine Sperrrichtung auf. Bevorzugt ist das Rückschlagventil als Lamellenrückschlagventil ausgebildet.

Im Rahmen einer ersten Abwandlung kann ein Rückschlagventil der Ventilanordnung in der Steuerleitung angeordnet sein. Insbesondere hat sich eine Anordnung des Rückschlagventils zwischen einer Verdichterkammer des Luftverdichters und einem Drucksteueranschluss des Entlüftungsventils als vorteilhaft erwiesen. Dieser Aufbau ist vergleichsweise verlässlich und ermöglicht eine definierte Funktionalität des Rückschlagventils zusätzlich zu einem Auslassventil eines Luftverdichters. Vorteilhaft ist in selbsttätiger Öffnungsrichtung des Rückschlagventils der Drucksteueranschluss des Entlüftungsventils mit Steuerdruck beaufschlagbar. Bei Druckbeaufschlagung einer Steuerleitung über den Luftverdichter öffnet bevorzugt zunächst ein Rückschlagventil selbsttätig in Öffnungsrichtung zum Drucksteueranschluss des Entlüftungsventils.

Im Rahmen einer zweiten Variante kann eine Verdichterkammer eines Kompressors des Luftverdichters ein Auslassventil (vorzugsweise in einer pneumatischen Zuführleitung zur Druckluftzuführung) aufweisen, ggfs. zusätzlich oder alternativ auch ein Anschlussventil (vorzugsweise in einer pneumatischen Steuerleitung zum Steueranschluss des Entlüftungsventils) aufweisen, das die Funktion eines Gegenventils mit Rückschlagfunktion der Verdichteranordnung übernimmt, insbesondere alternativ zum Rückschlagventil der Verdichteranordnung übernimmt. Diese Abwandlung hat den Vorteil, dass das Auslassventil und/oder Anschlussventil synergetisch nicht nur als solches zum Auslassen eines Druckluftvolumens zur Druckluftzuführung genutzt werden kann, sondern darüberhinaus auch die Funktion eines Rückschlagventils zwischen Verdichterkammer des Luftverdichters und Drucksteueranschluss des Entlüftungsventils übernehmen kann. Das Entlüftungsventil ist bevorzugt als rein mechanisches Sperrventil ausgebildet.

Zusätzlich oder alternativ zu jeder der vorgenannten Anwandlungen hat es sich als vorteilhaft erwiesen, ein weiteres Gegenventil mit Rückschlagfunktion, insbesondere ein weiteres erstes Rückschlagventil, in einer pneumatischen Zuführleitung zwischen einer Verdichterkammer eines Kompressor und dem Druckluftanschluss der pneumatischen Hauptleitung anzuordnen. Insbesondere öffnet das weitere Gegenventil mit Rückschlagfunktion, insbesondere das weitere Rückschlagventil und/oder ein Auslassventil, vom Luftverdichter in Richtung des Druckluftanschlusses selbsttätig. Diese weitere Abwandlung hat sich als vergleichsweise einfach im Aufbau erwiesen, insbesondere wenn das weitere erste Rückschlagventil das vorgenannte erste Rückschlagventil der ersten Abwandlung ersetzt. Insbesondere im letzten Fall hat es sich als vorteilhaft erwiesen, dass eine Steuerleitung frei von einem Rückschlagventil ist.

Im Rahmen einer weiteren Abwandlung kann die Steuerleitung zwischen einer Verdichterkammer eines Kompressors und dem weiteren Rückschlagventil abzweigen. Dies ermöglicht vorteilhaft die Anbindung der Steuerleitung an den Luftverdichter sowie die pneumatische Zuführleitung zur Druckluftzuführung. Insbesondere kann die Steuerleitung unmittelbar an die Verdichterkammer und/oder unmittelbar an die pneumatische Zuführleitung zur Druckluftzuführung angeschlossen sein.

Vorzugsweise lässt sich nach dem Konzept der Erfindung sowie insbesondere gemäß der vorgenannten Weiterbildungen im angesteuertem Zustand der Ventilanordnung erreichen, dass der Kompressor zwecks Erzeugung eines Steuerdrucks für den Drucksteueranschluss in Betrieb ist. Vorzugsweise ist der Steuerdruck ausreichend zum selbsttätigen Öffnen eines Rückschlagventils gegen dessen Sperrrichtung, Umgekehrt hat es sich als vorteilhaft erwiesen, dass wenn der Kompressor nicht im Betrieb ist, eine Entlüftung der Steuerleitung in Sperrrichtung des Rückschlagventils erfolgen kann. Insbesondere hat sich dazu ein Rückschlagventil bewährt, das kurz gesagt dynamisch dicht und statisch undicht ist. Konstruktiv lässt sich ein Rückschlagventil vorzugsweise als Lamellenrückschlagventil mit definierter statischer Leckage realisieren.

Insbesondere hat es sich in einer ersten Abwandlung zur Realisierung der Entlüftungsfunktion als vorteilhaft erwiesen, dass eine Entlüftungsdrossel in einer das Rückschlagventil umgehenden ersten Bypass-Leitung angeordnet ist, die vorzugsweise wenigstens in Sperrrichtung des Rückschlagventils, insbesondere bidirektional, durchströmbar ist.

Grundsätzlich kann eine Entlüftungsdrossel aufweisende erste Bypass-Leitung auch in einer zweiten Abwandlung realisiert sein, beispielsweise als Parallelleitung zur Steuerleitung oder Parallelleitung zu einer vorgenannten pneumatischen Zuführleitung zwischen Kompressor und Druckluftanschluss.

Die eine Entlüftungsdrossel aufweisende erste Bypass-Leitung kann zusätzlich oder alternativ in einer dritten Abwandlung auch als Parallelleitung zu einer Verdichterkammer eines Kompressors, insbesondere als Parallelleitung zu einem Auslassventil einer Verdichterkammer eines Kompressors gebildet sein.

Die eine Entlüftungsdrossel aufweisende erste Bypass-Leitung kann zusätzlich oder alternativ in einer vierten Abwandlung auch als Parallelleitung zu einem Auslassventil einer Verdichterkammer eines Kompressors gebildet sein, vorzugsweise wenigstens einseitig, insbesondere beidseitig, an eine Zuführleitung anschließen.

Die vorgenannten vier Abwandlungen sowie weitere hier nicht genannte Abwandlungen einer ersten Bypass-Leitung mit Entlüftungsdrossel lassen sich einzeln oder in Kombination realisieren.

Darüberhinaus hat sich eine für die effiziente Entlüftung als auch Trocknerregeneration vorzugsweise Anordnung einer ersten Drossel in der pneumatischen Hauptleitung und/oder einer zweiten Drossel in der Entlüftungsleitung als vorteilhaft erwiesen.

Vorzugsweise sieht die Ventilanordnung weiter ein parallel zur Bypass-Leitung angeschlossenes Gegenventil mit Rückschlagfunktion vor. Vorzugsweise ist eine weitere Drossel in einer ein Gegenventil mit Rückschlagfunktion umgehenden Bypass-Leitung angeordnet, die in Sperrrichtung des Gegenventils mit Rückschlagfunktion, insbesondere bidirektional, durchströmbar ist.

Insbesondere ist ein Rückschlagventil und/oder ein Auslassventil und/oder ein Anschlussventil --insbesondere ein in der Steuerleitung angeordnetes Rückschlagventil und/oder ein Auslassventil und/oder ein Anschlussventil des Kompressors-- derart statisch offen gebildet, dass wenn der Kompressor nicht in Betrieb ist, eine Entlüftung der Steuerleitung in Sperrrichtung des Rückschlagventils ermöglicht ist.

Insbesondere umfasst eine dynamisch geschlossene Funktionalität der Ventilanordnung das erste Rückschlagventil und die erste Bypass-Leitung, insbesondere mit einer weiteren Drossel, derart, dass ein Steuerdruck aufrecht zu erhalten ist, wenn der Kompressor in Betrieb ist; der Steuerdruck ist selbst bei gegen Sperrrichtung des Rückschlagventils durchströmter Entlüftungsdrossel ausreichend zum selbsttätigen Öffnen des ersten Rückschlagventils gegen dessen Sperrrichtung.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in' der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1A ein Schaltschema für eine erste Ausführungsform einer Druckluftversorgungsanlage mit einem drucklos geöffneten Entlüftungsventil;
Fig. 1B ein Ausschnitt des Schaltschemata für eine abgewandelte Ausführungsform einer Druckluftversorgungsanlage gemäß einer Variante mit einem drucklos geschlossenen Entlüftungsventil;
Fig. 2 ein weiteres Schaltschema für eine weitergebildete Ausführungsform der Fig. 1;
Fig. 3A, Fig. 3B Teilschaltschemata für noch weitere Ausführungsformen in Abwandlung der in Fig. 2 gezeigten weitergebildeten Ausführungsform;
Fig. 4 schematisch in einem Ablaufdiagramm die grundsätzliche Abfolge von Schritten zum Entlüften einer Pneumatikanlage bzw. eines Lufttrockners bei einer Druckluftversorgungsanlage, beispielsweise der Fig. 1A oder Fig. 2 oder Fig. 3A oder-Fig. 3B.

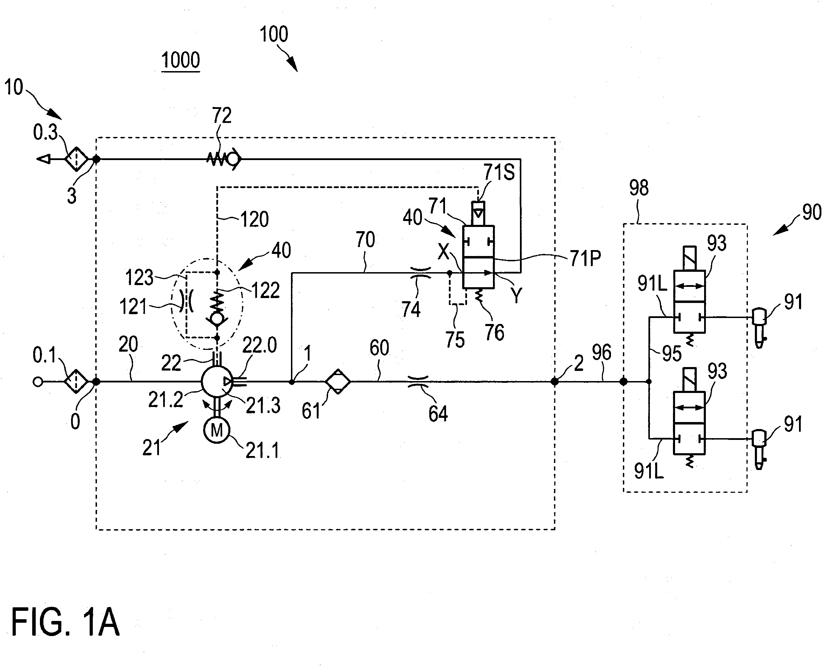

Fig. 1A zeigt ein pneumatisches System 100 mit einer Druckluftversorgungsanlage 10 sowie einer Pneumatikanlage 90, die vorliegend in Form eines Luftfedersystems für einen nicht näher gezeigten Fahrzeugaufbau eines Fahrzeugs 1000. Die Pneumatikanlage 90 ist hinsichtlich einer für eine Achse des Fahrzeugaufbaus vorgesehenen Luftfederung vorliegend teilweise gezeigt. Diese sieht zwei Bälge 91 vor, die zur Luftfederung oder auch Niveauregelung je nach Regelungsanforderung mit Druckluft befüllt werden können oder aus denen Druckluft entweichen kann. Dazu sind die Bälge 91 an eine Galerie 95 angeschlossen, nämlich hier über als Zweigleitung von der Galerie 95 abgehende Balgleitungen 91L. Die Balgleitungen 91L zweigen von der Galerie 95 ab, wobei jede Balgleitung 91L ein Balgventil 93 in Form eines Wegeventils aufweist. Die für eine Achse vorgesehenen zwei Balgventile 93 sind vorliegend in einem Zweifach-ventilblock 98 in Baueinheit zusammengefasst. Der Druckluftinhalt eines Balgs 91 kann durch Öffnen oder Schließen eines der Balgventile 93 geregelt verändert werden. Druckluft kann der Galerie 95 über eine Pneumatikleitung 96 zu- oder abgeführt werden, die an einen Druckluftanschluss 2 der Druckluftversorgungsanlage 10 angebunden ist.

Die Druckluftversorgungsanlage 10 dient zum Betreiben der Pneumatikanlage 90, d. h. die Pneumatikanlage 90 wird über den Druckluftanschluss 2 mit Druckluft versorgt und die Pneumatikanlage 90 kann über den Druckluftanschluss 2 entlüftet werden.

Zur Erzeugung von Druckluft sieht die Druckluftversorgungsanlage 10 eine Luftzuführung vor, die einen Luftzuführungsanschluss 0 sowie einen Luftfilter 0.1 aufweist. Eine pneumatische Zuführleitung 20 der Luftzuführung kann über den Luftzuführungsanschluss 0 aufgenommene Luft einem Luftverdichter 21 zuführen. Der Luftverdichter 21 weist vorliegend einen über einen Motor 21.1 angetriebenen einstufigen Kompressor 21.2 auf. Der Kompressor 21.2 hat vorliegend eine einzige Verdichterstufe mit einer Verdichterkammer 21.3, an die über ein Auslassventil 22.0 zum einen die zur Druckluftzuführung 1 weiter verlaufende pneumatische Zuführleitung 20 der Luftzuführung als auch noch eine pneumatische Steuerleitung 120 angeschlossen ist.

An die Druckluftzuführung 1 schließt eine pneumatische Hauptleitung 60 an, die die Druckluftzuführung 1 mit dem Druckluftanschluss 2 verbindet. In der pneumatischen Hauptleitung 60 ist ein Lufttrockner 61 und eine erste Drossel 64 in der genannten Reihenfolge von der Druckluftzuführung 1 in Richtung des Druckluftanschlusses 2 --d. h. in einer Befüllrichtung-- angeordnet.

Von der Druckluftzuführung 1 zweigt eine Entlüftungsleitung 70 ab, in der zunächst eine zweite Drossel 74 und danach in Richtung eines Entlüftungsanschlusses 3 --d. h. in Entlüftungsrichtung-- ein Entlüftungsventil 71 mit einem unbetätigt offenen Ventilkolben eines Pneumatikteils 71P angeschlossen ist. Dazu sieht der pneumatisch aktuierbare Pneumatikteil 71P des Entlüftungsventils 71 einen druckseitigen Ventilanschluss X und eine entlüftungsseitigen Ventilanschluss Y vor, an denen die Entlüftungsleitung 70 auf einer Druckseite mit der zweiten Drossel 74 bzw. auf einer Entlüftungsseite mit einem Entlüftungsfilter 0.3 anschließt. Das Entlüftungsventil 71 weist außerdem einen Drucksteueranschluss 71S auf, der über die vorerwähnte Steuerleitung 120 mit Steuerdruck beaufschlagbar ist. Im nicht steuerdruck-beaufschlagten Zustand des Drucksteueranschlusses 71S ist das Entlüftungsventil in dem in Fig. 1A gezeigten ersten Schaltzustand zwischen den Ventilanschlüssen X, Y offen, d. h. die Entlüftungsleitung 70 ist von der Druckluftzuführung 1 zum Entlüftungsanschluss 3 offen, sodass ein nicht näher bezeichneter Lufttrocknerausgang des Lufttrockners 61 offen zum Entlüftungsanschluss 3 ist.

Vorliegend eingezeichnet ist in der Entlüftungsleitung 70 zwischen dem entlüftungsseitigen Ventilanschluss Y und dem Entlüftungsfilter 0.3 ein Entlüftungs-Rückschlagventil 72, das zum Schutz vor Eintrag in die Entlüftungsleitung 70 und der Druckrückhaltung bzw. Rückhaltedruck-Begrenzung bei Entlüftung dient. Das Entlüftungs-Rückschlagventil 72 ist optional und kann bedarfsweise auch entfallen, soweit nicht bei Entlüftung ein kleiner Differenzdruck bestehen bleiben soll. Diese Funktion eines Rückschlagventils 72 lässt sich zweckmäßig unter Entfallen desselben in die Mindestdruckventil-Anordnung 130 integrieren --z. B. indem statt des Mindestdruckventils 132 ein Rückschlagventil wie das des Rückschlagventils 72 vorgesehen wird-- wodurch zudem die Regeneration des Lufttrockners 61 vorteilhaft beeinflusst wird ohne die Nennweite der ersten Drossel 134 einschränken zum müssen.

Das zuvor erläuterte mechanische Entlüftungsventil 71 kann bei Anlegen eines Steuerdrucks am Drucksteueranschluss 71S in eine zweite Schaltstellung übergehen, in welcher der druckseitige Ventilanschluss X und der entlüftungsseitige Ventilanschluss Y in der Entlüftungsleitung 70 pneumatisch getrennt sind. Die zweite Schaltstellung dient insofern dem Betrieb der Druckluftversorgungsanlage 10 zum Befüllen der Pneumatikanlage 90 aus dem Luftverdichter 21; d. h. von der Druckluftzuführung über die pneumatische Hauptleitung 60 zum Druckluftanschluss 2. Dagegen dient die in Fig. 1A dargestellte erste Schaltstellung des Entlüftungsventils 71 in nicht Steuerdruck-beaufschlagten Zustand dem Entlüften der Druckluftversorgungsanlage 10, bzw. der Pneumatikanlage 90 über den Lufttrockner 61.

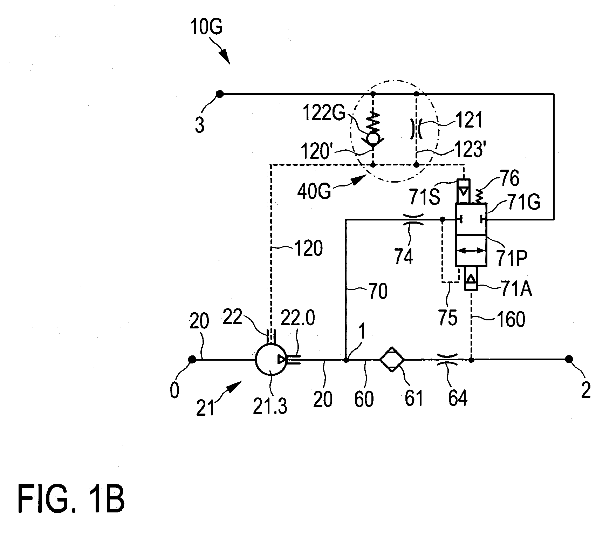

Der Ausschnitt der Fig. 1B einer abgewandelten Druckluftversorgungsanlage 10G zeigt eine abgewandelte Ausführungsform mit einem unbetätigt geschlossenen Entlüftungsventil 71G in der Entlüftungsleitung 70 unter Bildung einer geschlossenen Ventilanordnung 40G gemäß einer Variante; dies zur Umsetzung einer selbstverstärkend geschlossenen Funktionalität. Im Übrigen werden für gleiche oder ähnliche Teile oder Teile gleicher oder ähnlicher Funktion gleiche Bezugszeichen verwendet und auf die korrespondierenden Beschreibungsteile verwiesen. Insbesondere ist in der Zeichnung eine vorteilhafte Steuerleitung bzw. Zweigleitung 120, 120' und Bypassleitung 123, 123' nur der Übersichtlichkeit halber mit gestrichelter Linie eingezeichnet; gleiches gilt für damit in Zusammenhang stehenden Leitungen ähnlicher oder analoger Funktionen.

Bei dem unbetätigt geschlossenen Entlüftungsventil 71G wird der unbetätigt geschlossene Ventilkolben des Pneumatikteils 71P mit einer relativ schwachen Ventilfeder 76 immer geschlossen gehalten. Anders ausgedrückt zeigt Fig.1B quasi das unbetätigt geschlossene Entlüftungsventil 71G, bei dem die Ventilfeder 76 lediglich die Reibung überwindet, um eine definierte Ausgangslage herzustellen. Im Betrieb ist die pneumatische Kraft auf die Kolbenrückseite --allgemeiner die Seite des Pneumatikteils 71P seitens des Drucksteueranschlusses 71S-- größer als auf die Kolbenunterseite (z. B. in einem Ringraum) seitens des Druckgegensteueranschlusses 71A. Der Druckgegensteueranschluss 71A ist an eine Gegendrucksteuerleitung 160 angeschlossen, die von der pneumatischen Hauptleitung 60 als Zweigleitung abzweigt. Das Entlüftungsventil 71 bleibt somit gemäß dieser Auslegung beim Füllen geschlossen. Wird der Luftverdichter 21 gestoppt, dann entweicht die Luft, die den Kolben infolge der Druckkraft am Drucksteueranschlusses 71S zuhält über die Drossel 121, bis der Trocknerinnendruck den Kolben (allgemeiner den Pneumatikteil 71P) des Entlüftungsventils 71 --und damit das Entlüftungsventil 71-- in die offene Entlüftungsstellung bringt. Nach Druckabbau bringt die Ventilfeder 76 alles wieder in die unbetätigte Ausgangsstellung, wie diese in Fig.1B gezeigt ist. Das Rückschlagventil 122G ist hier als Druckbegrenzung zu verstehen, die sonst z.B. vom Relaiskolben des Pneumatikteils 71P selbst gewährleistet werden müsste.

Sowohl für die in Fig. 1A als auch die in Fig. 1B gezeigte Ausführungsform gilt, dass mit Anlauf des Luftverdichters 21 und damit steigendem Druck und Steuerdruck in der Steuerleitung 120 die Bypass-Leitung 123, 123' verstärkend auf die Abdichtung des Ventilkolbens wirkt. Bei ausreichend hohem Druck in der Bypass-Leitung 123, 123' aber wird ein weiterer Druckanstieg durch das Öffnen des Rückschlagventiles 122 in der Steuerleitung 120 (Fig. 1A) bzw. des Rückschlagventiles 122G in der Zweigleitung 120' der Steuerleitung 120 (Fig. 1B) zur Entlüftung 3 verhindert. Dann steigt nur noch der Trocknerinnendruck, der vorliegend über die Trocknerinnendruck-Leitung 75 symbolisiert ist, bis der flächenabhängige Gleichgewichtszustand erreicht bzw. überwunden wird; somit wird eine Druckbegrenzung aktiv. Nach Kompressorstop baut die statisch undichte Bypass-Leitung 123, 123' Druck ab und der Ventilkolben des Pneumatikteils 71P wird durch den Trocknerinnendruck --anstehend in der Trocknerinnendruck-Leitung 75-- gegen die schwache Federkraft der Ventilfeder 76 angehoben - gemäß Fig. 1B wird entlüftet. In einer abgewandelten Ausführungsform kann anstelle oder zusätzlich zur Leckage der Bypass-Leitung 123, 123' auch ein kleiner Magnet eingesetzt werden, um das Entlüftungssystem am Entlüftungsventil 71G statisch undicht zu gestalten. Damit ließen sich große Drücke mit relativ geringen Federkräften handhaben und die Elastomerdichtungen würden im Ruhezustand nur wenig belastet.

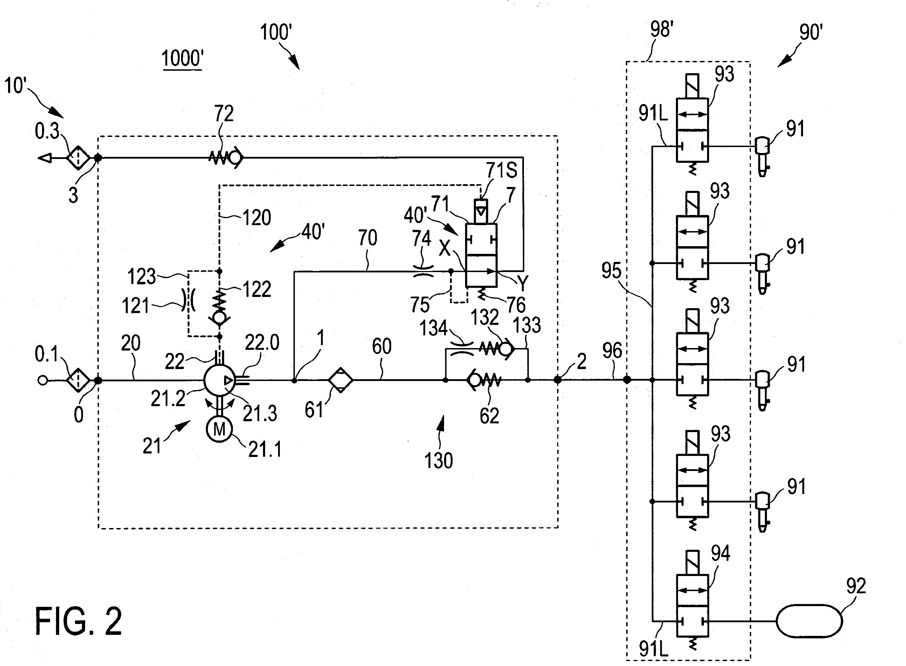

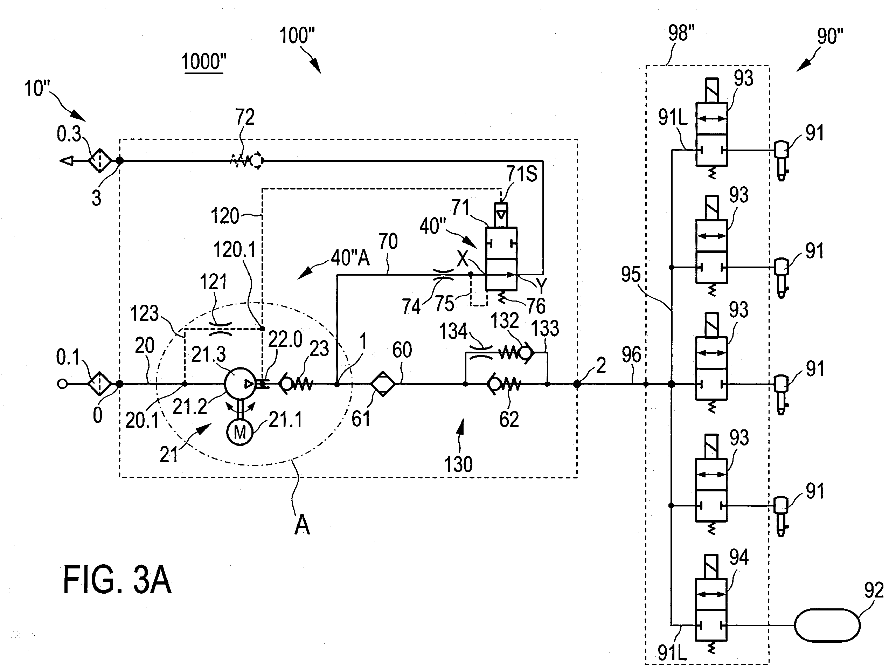

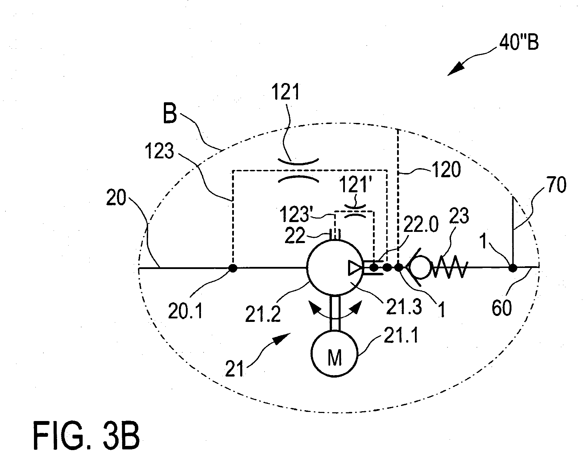

Grundsätzlich kann die in Fig. 1B dargestellte Variante einer Druckluftversorgungsanlage 10G zur Umsetzung einer selbstverstärkend geschlossenen Funktionalität --d. h. mit einem unbetätigt geschlossenen Entlüftungsventil 71G in der Entlüftungsleitung 70 mit den beschriebenen pneumatischen Komponenten, insbesondere dem Rückschlagventil 122G und der Entlüftungsdrossel 121 der Ventilanordnung 40G-- auch bei den folgenden anhand von Fig. 2 und Fig. 3A und Fig. 3B beschriebenen Ausführungsformen als Variante eingesetzt werden.

Weiter zusätzlich bezugnehmend auf Fig. 1A und Fig.1B kann, --um eine lediglich pneumatische Ansteuerung des Entlüftungsventils 71, 71G gemäß dem Konzept einer Kompressor-gesteuerten Entlüftungsfunktionalität zu realisieren-- das Entlüftungsventil 71, 71G Teil einer Ventilanordnung 40, 40G sein, die zusätzlich zum Entlüftungsventil 71, 71G auch ein in der Steuerleitung 120 angeordnetes Rückschlagventil 122 (wie in Fig. 1A) aufweist, das auch als erstes Rückschlagventil 122 bezeichnet wird.

Das vorliegend nach Fig. 1A z. B. als Lamellenrückschlagventil gebildete Rückschlagventil 122 ist dynamisch dicht und statisch undicht. Für die statische Undichtigkeit ist eine erste Bypass-Leitung 123 zur Steuerleitung 120 gebildet, die das erste Rückschlagventil 122 umgeht und in der eine bidirektional, insbesondere in Sperrrichtung des ersten Rückschlagventils 122, durchströmbare Entlüftungsdrossel 121 angeordnet ist. Ein am Drucksteueranschluss 71S anliegender Steuerdruck kann damit in Sperrrichtung des ersten Rückschlagventils 122 über die Entlüftungsdrossel 121 und die erste Bypass-Leitung 123 entlüftet werden. Eine Entlüftungsströmung des Steuerdrucks kann beispielsweise in die Verdichterkammer 21.3 des Kompressors 21.2 entlüftet werden. Die Entlüftungsströmung kann zur Umgebung in Richtung des Filters 0.1 und des Luftzuführungsanschlusses 0 geführt werden. Die Entlüftungsströmung des Steuerdrucks kann zusätzlich oder alternativ auch über die Druckluftzuführung 1 in die Entlüftungsleitung 70 zum Entlüftungsanschluss 3 geführt werden. Dies gilt insbesondere dann, wenn der Druck in der Bypass-Leitung 123 derart niedrig ist, dass der Lufttrockner 61 über die Federkraft am Ventilkolben des Entlüftungsventils 71 bereits öffnet oder geöffnet ist. Auf diese hier beschriebene oder ähnliche Weise kann eine Restentlüftung der Bypass-Leitung 123 erfolgen.

Andererseits ist das erste Rückschlagventil 122 vorliegend derart dynamisch geschlossen, dass beim Betreiben des Kompressors 21.2 --trotz der bidirektional durchströmbaren Entlüftungsdrossel 121-- ein Steuerdruck am Drucksteueranschluss 71S aufrecht erhalten wird. Anders ausgedrückt, kann bei Betrieb des Kompressors 21.2 ein ausreichender Steuerdruck zum selbsttätigen Öffnen des Rückschlagventils 122 gegen dessen Sperrrichtung aufgebaut werden und am Drucksteueranschluss 71S angelegt werden; dies selbst bei gegen Sperrrichtung des Rückschlagventils 122 durchströmter Entlüftungsdrossel 121.

Im Einzelnen ergibt sich die pneumatische Ansteuerungsfunktionalität des Entlüftungsventils 71 wie folgt. In nicht angesteuertem Zustand der Ventilanordnung 40, d. h. ohne Druckbeaufschlagung der Ventilanordnung 40 ist der Drucksteueranschluss 71S des Entlüftungsventils 71 ohne Beaufschlagung von Steuerdruck; das Entlüftungsventil 71 befindet sich in dem in Fig. 1A dargestellten ersten, also offenen, Schaltzustand, bei dem die Entlüftungsleitung 70 zwischen dem druckseitigen Ventilanschluss X und entlüftungsseitigen Ventilanschluss Y durchgehend zum Entlüftungsanschluss 3 geöffnet ist. Ein Lufttrockner 61 bzw. eine Galerie 95 bzw. die Bälge 91 einer Pneumatikanlage können entlüftet werden sobald eines der Balgventile 93 öffnet. Eine Entlüftungsströmung kann vom Balg 91 über ein Balgventil 93 in die Galerie 95 sowie die pneumatische Leitung 96 und die pneumatische Hauptleitung 60 unter Regeneration des Lufttrockners 61 in die Entlüftungsleitung 70 und das Entlüftungsventil 71 zum Entlüftungsanschluss 3 in die Umgebung entweichen.

Sollen die Bälge 91 der Pneumatikanlage 90 befüllt werden, wird der Betrieb des Luftverdichters 21 aufgenommen; dazu treibt der Elektromotor 21.1 den Kompressor 21.2 an, welcher Druckluft an der Druckluftzuführung 1 über das Auslassventil 22.0 zur Verfügung stellt. Ein entsprechender Druck liegt auch in der Steuerleitung 120 an und öffnet das erste Rückschlagventil 122 in selbsttätiger Öffnungsrichtung. Das erste Rückschlagventil 122 ist bei Betrieb des Kompressors 21.2 in Folge der mit der Bypass-Leitung 123 und der Drossel 121 geführten Auslegung dynamisch geschlossen. D. h. der Betrieb des Kompressors 21.2 ist ausreichend, um in der Verdichterkammer 21.3 einen Druck aufzubauen, der ausreichend für einen am Drucksteueranschluss 71S anliegenden Steuerdruck ist. Der Steuerdruck ist ausreichend hoch, um den aktuierbaren Pneumatikteil 71P des Entlüftungsventils 71 von der in Fig. 1A gezeigten ersten Schaltstellung in eine zweite Schaltstellung zu überführen, bei welcher der druckseitige Ventilanschluss X und der entlüftungsseitige Ventilanschluss Y pneumatisch getrennt ist; d. h. die Entlüftungsleitung 70 geschlossen ist. Dadurch wird die Entlüftungsleitung 70 durch das Entlüftungsventil 71 pneumatisch unterbrochen, d. h. der Trocknerausgang des Lufttrockners 61 bzw. die Druckluftzuführung 1 ist gegen den Entlüftungsanschluss 3 pneumatisch getrennt. Somit kann über die Druckluftzuführung 1 ausreichend Druckluft --im Lufttrockner 61 getrocknet-- und über die erste Drossel 64 am Druckluftanschluss zum Befüllen der Pneumatikanlage 90 zur Verfügung gestellt werden.

Fig. 2 zeigt eine weitere Ausführungsform einer Druckluftversorgungsanlage 10', bei welcher die erste Drossel 64 durch eine Mindestdruckventil-Anordnung 130 ersetzt bzw. modifiziert ist. Im Übrigen sind für gleiche oder ähnliche Teile des pneumatischen Systems 100' bzw. der Druckluftversorgungsanlage 10' bzw. der Pneumatikanlage 90' oder für Teile identischer oder ähnlicher Funktion der Einfachheit halber gleiche Bezugszeichen benutzt. Betreffend diese Merkmale wird zur Beschreibung der Fig. 2 auf die entsprechenden Beschreibungsteile der Fig. 1A verwiesen.

Hinsichtlich der Pneumatikanlage 90' sind bei dieser neben vier Bälgen 91 auch ein Druckspeicher 92 vorgesehen, dem ein Speicherventil 94 in Form eines Wegeventils in einer als Zweigleitung von der Galerie 95 abgehenden Speicherleitung 92L vorgeschaltet ist. Die Balgventile 93 und das Speicherventil 94 sind vorliegend in einem fünffach Ventilblock 98' zusammengefasst.

Die Mindestdruckventil-Anordnung 130 sieht ein in der Pneumatikhauptleitung 60 angeschlossenes --auch als zweites Rückschlagventil bezeichnetes-- Rückschlagventil 62 vor, das mittels einer zweiten Bypass-Leitung 133 umgangen ist; d. h. die zweite Bypass-Leitung 133 schließt an die Pneumatikhauptleitung 60 druckseitig zwischen Lufttrockner 61 und Rückschlagventil 62 an und luftanschlussseitig zwischen dem Rückschlagventil 62 und dem Druckluftanschluss 2 an. In der zweiten Bypass-Leitung 133 ist ein Mindestdruckventil 132 und eine --aufgrund des Mindestdruckventils 132-nur unidirektional durchströmbare erste Drossel 134 angeordnet. Das Mindestdruckventil 132 öffnet in Sperrrichtung des Rückschlagventils 62. Gegen die Sperrrichtung des zweiten Rückschlagventils 62 --d. h. selbsttätig öffnend-- kann aus einer Druckluftzuführung 1 ein Druckluftanschluss 2, z. B. zur Befüllung einer Galerie 95, mit Druckluft beaufschlagt werden. Anders ausgedrückt, wird aufgrund der Mindestdruckventil-Anordnung 130 beim Befüllen der Pneumatikanlage 90' mittels des selbsttätig öffnenden zweiten Rückschlagventils 62 unter dem Förderdruck des Kompressors 21.2 der volle Leitungsquerschnitt der pneumatischen Hauptleitung 60 frei gegeben. Beim Entlüften dagegen wird nach Überwinden eines Mindestdrucks --gemäß Auslegung des Mindestdruckventils 132-- die erste Drossel 134 wirksam. Zum Entlüften der Pneumatikanlage 90' kann ein Entlüftungsstrom von Druckluft über das Mindestdruckventil 132 und die erste Drossel 134 entweichen. Ein Entlüftungsstrom wird zum Regenerieren des Lufttrockners 61 genutzt und wird weiter in die Entlüftungsleitung 70 über die zweite Drossel 74 und das Entlüftungsventil 71 zum Entlüftungsanschluss 3 geführt.

Bei allen hier dargestellten Ausführungsformen eines pneumatischen Systems-insbesondere sowohl bei der in Fig. 2 dargestellten Ausführungsform eines pneumatischen Systems 100' mit einer Druckluftversorgungsanlage 10' sowie einer Pneumatikanlage 90' als auch bei einer nachfolgend erläuterten Ausführungsform eines pneumatischen Systems 100" mit einer Druckluftversorgungsanlage 10" sowie einer Pneumatikanlage 90"-- kann ein Umfüllen von einem Speicher 92 in einen oder mehrere Bälge 91 erfolgen; allerdings funktioniert dies insbesondere bei den in Fig. 2 und Fig. 3A dargestellten Ausführungsformen nur dann vorteilhaft, wenn der Kompressor 21.2 vorher gestartet wird und einen Mindestdruck aufbaut, welcher die Entlüftung schließt, d. h. die Entlüftungsleitung 70 durch pneumatisches Ansteuern des Entlüftungsventils 71 über die pneumatische Steuerleitung schließt. Diese Vorgehensweise benötigt im Vergleich zu einem per Sperrventil in der pneumatischen Hauptleitung 60 direkt umgesetzten "mechanischen" Absperrung der Galerie 95 zwar etwas mehr Energie, da stattdessen ein "pneumatisches Absperren" der Galerie simuliert wird; die Vorgehensweise verhindert aber einen Luftverlust bzw. macht das Umfüllen überhaupt erst möglich.

Fig. 3A und Fig. 3B zeigen weiter gemäß Detail A bzw. Detail B abgewandelte Ausführungsformen einer Druckluftversorgungsanlage 10" für ein pneumatisches System 100" mit einer Pneumatikanlage 90" eines Fahrzeugs 1000". Für identische oder ähnliche Merkmale bzw. Merkmale identischer oder ähnlicher Funktion werden vorliegend der Einfachheit halber gleiche Bezugszeichen benutzt. Zur Beschreibung der entsprechenden Teile der Fig. 3A und Fig. 3B wird auf die Beschreibung der Fig. 2 und die Beschreibung der Fig. 1A Bezug genommen. Im Einzelnen wird im folgenden Detail A und Detail B der Fig. 3A bzw. Fig. 3B beschrieben.

Detail A der Fig. 3A zeigt eine abgewandelte Ausführung einer Ventilanordnung 40" mit entsprechend variierter Anbindung der Steuerleitung 120 an den Kompressor 21.2. Im Detail A ist ersichtlich, dass die Steuerleitung 120 direkt an ein Anschlussventil 22 der Verdichterkammer 21.3 des Kompressors 21.2 anschließt. Das Anschlussventil 22 übernimmt insofern die Funktionalität des Fig. 1A und Fig. 2 dargestellten ersten Rückschlagventils 122. Darüber hinaus ist vorliegend u. a. zur Restdruckabgrenzung in die pneumatische Zuführleitung 20 zwischen Auslassventil 22.0 und Druckluftzuführung 1 ein weiteres erstes Rückschlagventil 23 angeordnet. Vergrößert ist dieser Aufbau auch Fig. 3B zu entnehmen. Im Ergebnis ergibt sich eine vereinfachte Ausführung, bei der das Auslassventil 22.0 und/oder Anschlussventils 22 synergetisch genutzt werden kann, so dass nach selbsttätigem Öffnen desselben zur Steuerleitung 120 ein geeigneter Steuerdruck am Drucksteueranschluss 71S des Entlüftungsventils 71 aufgebaut werden kann.

In Fig. 3A ist eine erste Bypass-Leitung 123 mit der Entlüftungsdrossel 121 als Parallelleitung zur pneumatischen Zuführleitung 20 der Luftzuführung gebildet, wobei die pneumatische Zuführleitung 20 zwischen dem Luftzuführungsanschluss 0 und der Druckluftzuführung 1 verläuft. Die abgewandelte erste Bypass-Leitung 123 zweigt von einem Anschluss 20.1 der pneumatischen Zuführleitung 20 ab und führt zu einem Anschluss 120.1 der Steuerleitung 120 unter Umgehung des Luftverdichters 21. Auch in diesem Fall ist das die Funktionalität des Rückschlagventils übernehmende Auslassventil 22.0 insofern als statisch offenes Ventil gebildet; d. h. ein am Drucksteueranschluss 71S anliegender Steuerdruck kann bei gestopptem Betrieb des Kompressors 21.2 über die Bypass-Leitung 123 und die Entlüftungsdrossel 121 an den Anschluss 20.1 der Luftzuführungsleitung 20 und von da an den Luftzuführungsanschluss 0 entweichen - die Steuerleitung 120 wird entsprechend entlüftet.

Ganz ähnlich sieht Fig. 3B --wie im Detail B dargestellt-- eine weiter abgewandelte Bypass-Leitung 123' vor, die als Bypass-Leitung zum Auslassventil 22.0 gebildet ist. Hier kann eine Entlüftung der Steuerleitung 120 von einem Steuerdruck --das Auslassventil 22.0 umgehend-- über die Bypass-Leitung 123' in den Luftverdichter 21, z. B. in die Verdichterkammer 21.3 (gestrichelt dargestellte Bypass-Leitung 123' und Entlüftungsdrossel 121') erfolgen oder auch in einen Teil der Luftzuführungsleitung 20 nach dem Luftzuführungsanschluss 0 und vor der Verdichterkammer 21.3 (Bypass-Leitung 123 und Entlüftungsdrossel 121) erfolgen. In einer Abwandlung zu beiden Fällen kann die Entlüftungsdrossel 121, 121' insbesondere als integrierte Drossel im Auslassventil 22.0 des Kompressors 21.2 gebildet werden. Über die Auslegung der Flächenverhältnisse unter Berücksichtigung der EntlüftungsDrossel 121, 121' kann eine Druckbegrenzung realisiert werden. Die Druckbegrenzung greift über die pneumatische Bypass-Leitung 123, 123' nach dem Kompressor 21.2 --konkret zwischen Ausgang der Verdichterkammer 21.3 und Druckluftzuführung 1-- einen Druck ab, welcher bei Übersteigen eines Schwelldrucks über die Drossel 121, 121' ausgeglichen wird. Bei hohen Drücken verhindert die definierte Leckage über die Drossel 121, 121' einen weiteren Druckanstieg in der Bypass-Leitung 123, 123' und der ausreichend hohe Trocknerinnendruck kann den Ventilkolben des Pneumatikteils 71P des Entlüftungsventils 71 anheben. Ein Trocknerinnendruck ist vorliegend in allen Fig. 1A bis Fig. 3A über die Trocknerinnendruck-Leitung 75 symbolisch dargestellt, der insofern immer auf der Unterseite des Ventilkolben des Pneumatikteils 71P des Entlüftungsventils 71 in Richtung des Federdrucks der Ventilfeder des Entlüftungsventils 71 anliegt.

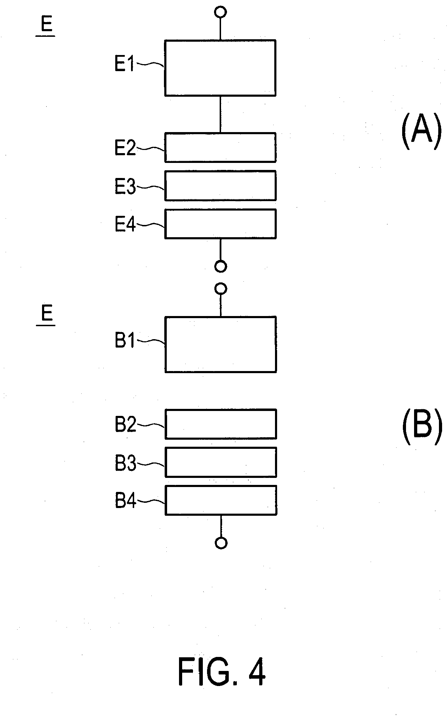

Fig. 4 zeigt schematisch in einem Ablaufdiagramm E die grundsätzliche Abfolge von Schritten E1 bis E4 zum Entlüften einer Pneumatikanlage 90, 90', 90" bzw. eines Lufttrockners 61. Dazu ist vorgesehen, dass in einem ersten Schritt E1 ein Kompressor 21.2 eines Luftverdichters 21 gestoppt ist, d. h. nicht in Betrieb ist. Entsprechend ist in einem zweiten Schritt E2 vorgesehen, dass eine Steuerleitung 120 über eine Entlüftungsdrossel 121 statisch offen ist. Sollte in der Steuerleitung ein Steuerdruck an einem Drucksteueranschluss 71S eines Entlüftungsventils 71 angelegen haben, kann dieser im zweiten Schritt E2 --am vorerwähnten ersten Rückschlagventil 122 vorbeientlüftet werden. In einem dritten Schritt E3 ist dementsprechend das Entlüftungsventil 71 in einem Steuerdruck-nicht-angesteuerten Zustand und damit offen zwischen dem druckseitigen Ventilanschluss X und dem entlüftungsseitigen Ventilanschluss Y. In einem vierten Schritt E4 kann durch Öffnen eines der Balgventile 93 ein Balg 91 oder durch Öffnen eines Speicherventils 94 ein Speicher 92, gegebenenfalls unter Regeneration des Trockners 61, zu einem Entlüftungsanschluss 3 entlüftet werden.

In Ansicht B der Fig. 4 ist ein Ablaufdiagramm B zum Befüllen einer Pneumatikanlage 90, 90', 90" gezeigt. Dieses sieht in einem ersten Schritt B1 den Start eines Kompressors 21.2 unter Verdichtung von Luft in einer Verdichterkammer 21.3 vor. Durch Öffnen eines die Funktionalität eines Rückschlagventils aufweisenden Auslassventils 22.0 oder Anschlussventils 22 der Verdichterkammer 21.3 oder eines Rückschlagventils 122 in einer Steuerleitung 120 zum Drucksteueranschluss 71S des Entlüftungsventils 71 kann in einem zweiten Schritt B2 ein Steuerdruck zur Aktivierung des Entlüftungsventils 71 aufgebaut werden. Ein Auslassventil 22.0 oder Anschlussventil 22 eines Kompressors ist dabei bevorzugt in Richtung einer Druckluftzuführung 1 noch geschlossen; d. h. ein Rückschlagventil 122 in einer Steuerleitung 120 öffnet vor einem Druckventil oder Auslassventil des Kompressors um zunächst einen Steuerdruck aufzubauen. In einem dritten Schritt B3 schließt das Entlüftungsventil 71, d. h. geht von einer nicht aktuierten offenen ersten Schaltstellung wie sie in den Fig. 1A oder Fig. 3A gezeigt ist, in eine pneumatisch aktuierte geschlossene zweite Schaltstellung über, bei welcher der druckseitige Ventilanschluss X und der entlüftungsseitige Ventilanschluss Y pneumatisch getrennt sind. In einem vierten Schritt B4 kann bei so geschlossenen Entlüftungsleitung 70 und weiter bestehendem Kompressorbetrieb, d. h. einem den Betätigungsdruck (Steuerdruck) des Entlüftungsventils 71 übersteigenden Kompressordruck-insbesondere damit öffnendem Auslassventil oder Druckventil des KompressorsDruckluft an der Druckluftzuführung 1 zur Verfügung gestellt werden und über den Lufttrockner 61 sowie über die erste Drossel 64 bzw. über das selbsttätig öffnende zweite Rückschlagventil 122 am Druckluftanschluss 2 angelegt werden. Im Ergebnis kann über den Druckluftanschluss 2 eine Galerie 95 der Pneumatikanlage 90, 90', 90" bzw. bei gegebenenfalls offenem Balgventil 93 ein entsprechender Balg 91 mit Druckluft befüllt werden.

### Bezugszeichenliste (Bestandteil der Beschreibung)

- 0: Luftzuführungsanschluss
- 0.1: Luftfilter
- 0.3: Entlüftungsfilter
- 1: Druckluftzuführung
- 2: Druckluftanschluss
- 3: Entlüftungsanschluss
- 10, 10', 10", 10G: Druckluftversorgungsanlage
- 20: pneumatische Zuführleitung
- 21: Luftverdichter
- 21.1: Motor
- 21.2: Kompressor
- 21.3: Verdichterkammer
- 22: Anschlussventil, insbesondere mit Rückschlagventilfunktion in der Steuerleitung 120
- 22.0: Auslassventil
- 23: weiteres Rückschlagventil
- 40, 40', 40", 40"A, 40"B, 40G: Ventilanordnung
- 60: pneumatische Hauptleitung
- 61: Lufttrockner
- 62: (zweites) Rückschlagventil, in der pneumatischen Hauptleitung 60
- 64: erste Drossel
- 70: Entlüftungsleitung
- 71, 71G: Entlüftungsventil
- 71P: Pneumatikteil
- 71S: Drucksteueranschluss an Kolbenoberseite
- 71A: Druckgegensteueranschluss auf Kolbenunterseite
- 72: optionales Entlüftungs-Rückschlagventil
- 74: zweite Drossel
- 75: symbolische Trocknerinnendruck-Leitung
- 76: Ventilfeder des Entlüftungsventils 71, 71G
- 90, 90': Pneumatikanlage
- 91: Balg
- 91L: Balgleitung als Zweigleitung
- 92: Speicher
- 92L: Speicherleitung als Zweigleitung
- 93: Balgventil als Wegeventil
- 94: Speicherventil als Wegeventil
- 95: Galerie
- 96: Pneumatikleitung
- 98, 98', 98": Zweifach-Ventilblock, Fünffach-Ventilblock
- 100, 100', 100": pneumatisches System
- 102,102': pneumatisches System
- 120, 120': pneumatische Steuerleitung, Zweigleitung
- 121, 121': Entlüftungsdrossel
- 122, 122G: (erstes) Rückschlagventil in der Steuerleitung 120
- 123, 123': erste und weitere (zweite) Bypassleitung
- 130: Mindestdruckventil-Anordnung
- 132: Mindestdruckventil
- 133: zweite Bypass-Leitung
- 134: erste Drossel
- 160: Gegendrucksteuerleitung
- 1000, 1000', 1000": Fahrzeug
- A, B: Detail
- X: druckseitiger Ventilanschluss
- Y: entlüftungsseitiger Ventilanschluss

## Patentansprüche

1. Druckluftversorgungsanlage (10, 10', 10") zum Betreiben einer Pneumatikanlage (90, 90', 90"), nämlich einer Luftfederanlage eines Fahrzeugs, aufweisend:
- eine Luftzuführung mit einem Luftverdichter (21) zur Versorgung einer Druckluftzuführung (1) mit Druckluft,
- eine pneumatische Hauptleitung (60), mit einem Lufttrockner (61) und einem Druckluftanschluss (2) zur Versorgung der Pneumatikanlage (90, 90', 90") mit Druckluft,
- eine Entlüftungsleitung (70), nämlich eine von der pneumatische Hauptleitung (60) an der Druckluftzuführung (1) abzweigende Entlüftungsleitung (70), aufweisend ein in der Entlüftungsleitung (70) angeschlossenes Entlüftungsventil (71) und einen Entlüftungsanschluss (3) zum Ablassen von Luft zur Umgebung, wobei das Entlüftungsventil (71) Teil einer steuerbaren Ventilanordnung (40, 40', 40") ist,
**dadurch gekennzeichnet, dass**
- das Entlüftungsventil (71), und/oder die Ventilanordnung (40, 40', 40") mit wenigstens dem Entlüftungsventil (71), mit einem vom Luftverdichter (21) abgeleiteten Steuerdruck pneumatisch beaufschlagbar ist, und
- ein Pneumatikteil (71P) des Entlüftungsventils (71) einen Ventilkolben umfasst, der mit einem am Drucksteueranschluss (71S) anstehenden Steuerdruck beaufschlagbar ist, der von einer an den Luftverdichter (21) unmittelbar angeschlossenen Steuerleitung (120) ableitbar ist.

2. Druckluftversorgungsanlage (10, 10', 10") nach Anspruch 1,
**dadurch gekennzeichnet, dass**
- in nicht druckbeaufschlagtem Zustand der Ventilanordnung (40, 40G, 40', 40") das Entlüftungsventil (71) geöffnet ist wobei ein aktuierbarer Pneumatikteil (71P) des Entlüftungsventils (71) in einer Entlüftungsleitung (70) in nicht angesteuertem Zustand des Entlüftungsventils (71) zwischen einem druckseitigen Ventilanschluss (X) und einem entlüftungsseitigen Ventilanschluss (Y) geöffnet ist, so dass in nicht angesteuertem Zustand des Entlüftungsventils (71), das Entlüftungsventil (71) geöffnet ist, um die Entlüftungsleitung (70) zum Entlüftungsanschluss (3) durchzuschalten, und
- das Entlüftungsventil (71) mit einem vom Luftverdichter (21) unmittelbar abgeleiteten Steuerdruck pneumatisch ansteuerbar ist, um die Entlüftungsleitung (70) vom Entlüftungsanschluss (3) abzusperren,
- der Steuerdruck in einer Steuerleitung (120) unmittelbar zwischen einer Verdichterkammer (21.3) des Luftverdichters (21) und einem Drucksteueranschluss (71S) gegen einen Pneumatikteil (71P) des Entlüftungsventils (71) verfügbar ist.

3. Druckluftversorgungsanlage (10, 10', 10") nach Anspruch 1 oder 2,
**dadurch gekennzeichnet, dass**
- ein Steuerdruck in einer Steuerleitung (120) unmittelbar zwischen einer Verdichterkammer (21.3) des Luftverdichters (21) und einem Drucksteueranschluss (71S) gegen einen Pneumatikteil (71P) des Entlüftungsventils (71), in Richtung einer Kraft einer Ventilfeder (76), verfügbar ist, und/oder
- ein Gegensteuerdruck in einer Gegendrucksteuerleitung (160) zwischen der pneumatischen Hauptleitung (60) und einem Druckgegensteueranschluss (71A) gegen einen Pneumatikteil (71P) des Entlüftungsventils (71), gegen Richtung einer Kraft einer Ventilfeder (76), verfügbar ist.

4. Druckluftversorgungsanlage (10, 10', 10") nach einem der Ansprüche 1 bis 3, **dadurch gekennzeichnet, dass** ein Pneumatikteil (71P) des Entlüftungsventils (71) in Form eines 2/2-Wegeventils gebildet ist und das Entlüftungsventil (71) einen Drucksteueranschluss (71S) aufweist, an welchen eine Steuerleitung (120) zur Führung des Steuerdrucks unmittelbar angeschlossen ist.

5. Druckluftversorgungsanlage (10, 10', 10") nach einem der Ansprüche 1 bis 4, **dadurch gekennzeichnet, dass** das Entlüftungsventil (71) zur direkten pneumatisch gesteuerten Schaltung eines Druckluftvolumens der Entlüftungsleitung (70) ausgebildet ist, wobei die Ventilanordnung das Entlüftungsventil (71) in der Entlüftungsleitung (70) und eine Drossel (121) in einer Bypass-Leitung (123, 123') und ein parallel zur Bypass- Leitung (123, 123') angeschlossenes Gegenventil mit Rückschlagfunktion umfasst, wobei das Gegenventil mit Rückschlagfunktion ein Auslassventil (22.0) in einer Zuführleitung (20) und/oder ein Anschlussventil (22) in einer Steuerleitung (120) und/oder ein Rückschlagventil (122) in einer Steuerleitung (120) umfasst.

6. Druckluftversorgungsanlage (10, 10', 10") nach einem der Ansprüche 1 bis 5, **dadurch gekennzeichnet, dass** der Luftverdichter (21) einen Kompressor (21.2) aufweist mit wenigstens einer Verdichterkammer (21.3), wobei an eine Verdichterkammer (21.3) des Kompressors (21.2) eine Steuerleitung (120) mittelbar über die Druckluftzuführung (1) oder unmittelbar über ein Auslassventil (22.0) und/oder ein Anschlussventil (22), angeschlossen ist.

7. Druckluftversorgungsanlage (10, 10', 10") nach einem der Ansprüche 1 bis 5, **dadurch gekennzeichnet, dass** die Ventilanordnung (40, 40', 40") zusätzlich zu dem Entlüftungsventil (71) ein Rückschlagventil (122, 23) oder dergleichen Gegenventil mit einer Rückschlagventilfunktion aufweist --oder ein Auslassventil (22.0) und/oder ein Anschlussventil (22) des Luftverdichters (21)--, über das in selbsttätiger Öffnungsrichtung der Drucksteueranschluss (715) des Entlüftungsventil (71) mit Steuerdruck beaufschlagbar ist.

8. Druckluftversorgungsanlage (10, 10', 10") nach einem der Ansprüche 1 bis 7, **dadurch gekennzeichnet, dass** ein Rückschlagventil (122) der Ventilanordnung (40, 40') in der Steuerleitung (120) angeordnet ist.

9. Druckluftversorgungsanlage (10, 10', 10") nach einem der Ansprüche 1 bis 8, **dadurch gekennzeichnet, dass** eine Verdichterkammer (21.3) eines Kompressors (21.2) ein Gegenventil mit Rückschlagfunktion aufweist, nämlich ein Auslassventil (22.0) und/oder ein Anschlussventil (22), vorzugsweise ein Anschlussventil (22) in einer Steuerleitung (120) zusätzlich zu einem Auslassventil (22.0) in einer Zuführleitung (20), das die Funktion eines Rückschlagventils (122) der Ventilanordnung (40") übernimmt.

10. Druckluftversorgungsanlage (10, 10', 10") nach einem der Ansprüche 1 bis 9, **dadurch gekennzeichnet, dass** ein weiteres Rückschlagventil (23) in einer pneumatischen Zuführleitung (20) zwischen einer Verdichterkammer (21.3) eines Kompressors (21.2) und dem Druckluftanschluss (1) angeordnet ist und in Richtung des Druckluftanschlusses (1) selbsttätig öffnet.

11. Druckluftversorgungsanlage (10, 10', 10") nach einem der Ansprüche 1 bis 10, **dadurch gekennzeichnet, dass** eine Steuerleitung (120) zwischen einer Verdichterkammer (21.3) eines Kompressors (21.2) und dem weiteren Rückschlagventil (23) abzweigt.

12. Druckluftversorgungsanlage (10, 10', 10") nach einem der Ansprüche 1 bis 11, **dadurch gekennzeichnet, dass** in angesteuertem Zustand der Ventilanordnung (40, 40', 40") der Kompressor (21.2) unter Erzeugung eines Steuerdrucks für den Drucksteueranschluss (71S) betreibbar ist, wobei der Steuerdruck zum selbsttätigen Öffnen eines Rückschlagventils (122) und/oder eines Auslassventils (22.0) und/oder eines Anschlussventils (22) ausreicht.

13. Druckluftversorgungsanlage (10, 10', 10") nach einem der Ansprüche 1 bis 12, **dadurch gekennzeichnet, dass** ein Rückschlagventil (122) und/oder ein Auslassventil (22.0) und/oder ein Anschlussventil (22), derart statisch offen gebildet ist, dass wenn der Kompressor (21.2) nicht in Betrieb ist, eine Entlüftung der Steuerleitung (120) in Sperrrichtung des Rückschlagventils ermöglicht ist.

14. Druckluftversorgungsanlage (10, 10', 10") nach einem der Ansprüche 1 bis 13, **dadurch gekennzeichnet, dass** eine Entlüftungsdrossel (121) in einer ein Gegenventil (122, 22, 22.0) mit Rückschlagfunktion umgehenden Bypass-Leitung (123) angeordnet ist, die in Sperrrichtung des Gegenventils mit Rückschlagfunktion durchströmbar ist.

15. Druckluftversorgungsanlage (10, 10', 10") nach einem der Ansprüche 1 bis 14, **dadurch gekennzeichnet, dass** die das Rückschlagventil (122, 122G) und/oder das Auslassventil (22) umgehende Bypass-Leitung (123, 123')
- als Parallelleitung zur Steuerleitung (120) gebildet ist und .beidseitig an diese anschließt, oder
- als Zweigleitung zur Steuerleitung (120) gebildet ist und einseitig an diese anschließt.

16. Druckluftversorgungsanlage (10, 10', 10") nach einem der Ansprüche 1 bis 15, **dadurch gekennzeichnet, dass** die wenigstens eine, ein Rückschlagventil und/oder ein Auslassventil (22.0) umgehende Bypass-Leitung (123, 123')- als Parallelleitung zu einer pneumatischen Zuführleitung (20) gebildet ist, die zwischen einer Verdichterkammer (21.3) eines Kompressors (21.2) und dem Druckluftanschluss (1) verläuft, und die Bypass-Leitung (123, 123') wenigstens einseitig an die Zuführleitung (20) anschließt,
- wenigstens eine Bypass-Leitung (123, 123') als Parallelleitung zu einer Verdichterkammer (21.3) eines Kompressors (21.2) gebildet ist, vorzugsweise beidseitig an die Zuführleitung (20) anschließt.

17. Druckluftversorgungsanlage (10, 10', 10") nach einem der Ansprüche 1 bis 16, **dadurch gekennzeichnet, dass** die wenigstens eine, ein Rückschlagventil und/oder ein Auslassventil (22.0) umgehende Bypass-Leitung (123, 123') - als Parallelleitung zu einem Auslassventil (22) einer Verdichterkammer (21.3) eines Kompressors (21.2) gebildet ist, vorzugsweise wenigstens einseitig oder beidseitig, an eine Zuführleitung (20) anschließt.

18. Druckluftversorgungsanlage (10, 10', 10") nach einem der Ansprüche 1 bis 17, **dadurch gekennzeichnet, dass** ein Rückschlagventil (122) und/oder Auslassventil. (22) derart dynamisch geschlossen ist, dass wenn der Kompressor (21.2) in Betrieb ist, ein Steuerdruck aufrecht zu halten ist, und selbst bei gegen Sperrrichtung des Rückschlagventils (122) und/oder Auslassventils (22) durchströmter Entlüftungsdrossel (121) ausreichend zum selbsttätigen Öffnen eines Rückschlagventils (22; 122) gegen dessen Sperrrichtung ist.

19. Druckluftversorgungsanlage (10, 10', 10") nach einem der Ansprüche 1 bis 18, **gekennzeichnet durch**
- eine erste Drossel (64) wobei die erste Drossel (64) unmittelbar in der pneumatische Hauptleitung (60) oder einer damit verbundenen Parallelleitung zwischen dem Lufttrockner (61) und dem Druckluftanschluss (2) angeordnet ist, und/oder
- eine zweite Drossel (74), wobei die zweite Drossel (74) in der Entlüftungsleitung (70) oder einer mit der Entlüftungsleitung (70) unmittelbar verbundenen Zweigleitung zwischen der Druckluftzuführung (1) und dem Entlüftungsventil (71) angeordnet ist. und/oder- eine weitere Drossel (121, 121') in einer Bypass-Leitung (123, 123') und ein parallel zur Bypass-Leitung (123, 123') angeschlossenes Gegenventil mit Rückschlagfunktion.

20. Pneumatisches System (100, 100', 100") mit der Druckluftversorgungsanlage nach einem der Ansprüche 1 bis 19 und einer Pneumatikanlage (90, 90', 90"), die in Form einer Luftfederanlage gebildet ist, die eine Galerie (95) und wenigstens eine an die Galerie (95) pneumatisch angeschlossene Zweigleitung (91L, 92L) mit mindestens einem Balg (91) und einem Druckspeicher (92) sowie mindestens einem dem Balg (91) und/oder dem Druckspeicher (92) vorgeordneten Wegeventil (93, 94) aufweist.

21. Verfahren zum Steuern einer Druckluftversorgungsanlage nach einem der vorhergehenden Ansprüche 1 bis 18 zum Betreiben einer Pneumatikanlage, nämlich einer Luftfederanlage eines Fahrzeugs, **dadurch gekennzeichnet, dass** das Verfahren zum Betreiben der Druckluftversorgungsanlage (10, 10', 10") und/oder der Pneumatikanlage (90, 90'), die Schritte aufweist:
- Öffnen des Entlüftungsventil (71) in nicht angesteuertem Zustand der Ventilanordnung (40, 40', 40");
- Schließen des Entlüftungsventils (71) durch pneumatisches Beaufschlagen der Ventilanordnung (40, 40', 40") über einen vom Luftverdichter (21), unmittelbar abgeleiteten Steuerdrück, der von einer an den Luftverdichter (21) unmittelbar angeschlossenen Steuerleitung (120) ableitbar ist, wobei
- zum Öffnen des Entlüftungsventils (71) ein Rückschlagventil (22; 122), nämlich ein in der Steuerleitung (120) angeordnetes Rückschlagventil (122) und/oder ein Auslassventil (22) des Kompressors (21.2), derart statisch offen gebildet ist, dass wenn der Kompressor (21.2) nicht in Betrieb ist, eine Steuerleitung (120) in Sperrrichtung des Rückschlagventils (122) entlüftet wird und/oder
- zum Schließen des Entlüftungsventils (71) ein Rückschlagventil (122) und/oder Auslassventil (22), nämlich ein in der Steuerleitung (120) angeordnetes Rückschlagventil (122) und/oder ein Auslassventil (22) des Kompressors (21.2), derart dynamisch geschlossen ist, dass wenn der Kompressor (21.2) in Betrieb ist, ein Steuerdruck aufrecht zu halten ist.

22. Verfahren nach Anspruch 21, **dadurch gekennzeichnet, dass** der aufrecht erhaltene Steuerdruck, selbst bei einer gegen die Sperrrichtung des Rückschlagventils (122) und/oder Auslassventils (22) durchströmten Entlüftungsdrossel, ausreicht zum selbsttätigen Öffnen eines Gegenventils mit Rückschlagfunktion, nämlich des Rückschlagventils (122) und/oder des Auslassventils (22.0) und/oder des Anschlussventils (22), gegen dessen Sperrrichtung.

## Claims

1. Compressed air supply installation (10, 10', 10") for operation of a pneumatic installation (90, 90', 90"), namely an air spring installation of a vehicle, comprising:
- an air feed with an air compressor (21) for supplying a compressed air feed (1) with compressed air,
- a pneumatic main line (60) with an air dryer (61) and a compressed air connection (2) for supplying the pneumatic installation (90, 90', 90") with compressed air,
- a purge line (70), namely a purge line (70) branching from the pneumatic main line (60) to the compressed air feed (1) and comprising a purge valve (71) connected in the purge line (70) and a purge connection (3) for releasing air to the environment, wherein the purge valve (71) is part of a controllable valve assembly (40, 40', 40"),
**characterized in that**
- the purge valve (71), and/or the valve assembly (40, 40', 40") with at least the purge valve (71), can be pneumatically loaded with a control pressure derived from the air compressor (21), and
- a pneumatic part (71P) of the purge valve (71) has a valve piston which can be loaded with a control pressure which is present at the pressure control connection (71S) and can be derived from a control line (120) connected directly to the air compressor (21).

2. Compressed air supply installation (10, 10', 10") according to Claim 1, **characterized in that**
- in non-pressurized state of the valve assembly (40, 40G, 40', 40"), the purge valve (71) is opened, wherein an actuatable pneumatic part (71P) of the purge valve (71) in a purge line (70) is opened in the non-activated state of the purge valve (71) between a pressure-side valve connection (X) and a purge-side valve connection (Y), so that in non-activated state of the purge valve (71), the purge valve (71) is opened in order to connect the purge line (70) through to the purge connection (3), and
- the purge valve (71) can be activated pneumatically with a control pressure derived directly from the air compressor (21) in order to shut off the purge line (70) from the purge connection (3),
- the control pressure is available in a control line (120) directly between a compressor chamber (21.3) of the air compressor (21) and a pressure control connection (71S) against a pneumatic part (71P) of the purge valve (71).

3. Compressed air supply installation (10, 10', 10") according to Claim 1 or 2, **characterized in that**
- a control pressure is available in a control line (120) directly between a compressor chamber (21.3) of the air compressor (21) and a pressure control connection (71S) against a pneumatic part (71P) of the purge valve (71), in the direction of a force of a valve spring (76), and/or
- a counter-control pressure is available in a counter-pressure control line (160) between the pneumatic main line (60) and a counter-pressure control connection (71A) against a pneumatic part (71P) of the purge valve (71), against the direction of a force of a valve spring (76).

4. Compressed air supply installation (10, 10', 10") according to any of Claims 1 to 3, **characterized in that** a pneumatic part (71P) of the purge valve (71) is formed as a 2/2-way directional valve, and the purge valve (71) comprises a pressure control connection (71S) to which a control line (120) is directly connected for guiding the control pressure.

5. Compressed air supply installation (10, 10', 10") according to any of Claims 1 to 4, **characterized in that** the purge valve (71) is configured for direct, pneumatically controlled switching of a compressed air volume of the purge line (70), wherein the valve assembly comprises the purge valve (71) in the purge line (70) and a choke (121) in a bypass line (123, 123'), and a counter-valve with check function connected in parallel to the bypass line (123, 123'), wherein the counter-valve with check function comprises an outlet valve (22.0) in a feed line (20) and/or a connection valve (22) in a control line (120) and/or a check valve (122) in a control line (120).

6. Compressed air supply installation (10, 10', 10") according to any of Claims 1 to 5, **characterized in that** the air compressor (21) comprises a compressor (21.2) with at least one compressor chamber (21.3), wherein a control line (120) is connected to a compressor chamber (21.3) of the compressor (21.2) indirectly via the compressed air feed (1) or directly via an outlet valve (22.0) and/or a connection valve (22) .

7. Compressed air supply installation (10, 10', 10") according to any of Claims 1 to 5, **characterized in that** the valve assembly (40, 40', 40") comprises, in addition to the purge valve (71), a check valve (122, 23) or similar counter-valve with a check valve function - or an outlet valve (22.0) and/or a connection valve (22) of the air compressor (21) - via which, in the automatic opening direction, the pressure control connection (71S) of the purge valve (71) can be loaded with control pressure.

8. Compressed air supply installation (10, 10', 10") according to any of Claims 1 to 7, **characterized in that** a check valve (122) of the valve assembly (40, 40') is arranged in the control line (120).

9. Compressed air supply installation (10, 10', 10") according to any of Claims 1 to 8, **characterized in that** a compressor chamber (21.3) of a compressor (21.2) comprises a counter-valve with check function, namely an outlet valve (22.0) and/or a connection valve (22), preferably a connection valve (22) in a control line (120) in addition to an outlet valve (22.0) in a feed line (20), which performs the function of a check valve (122) of the valve assembly (40").

10. Compressed air supply installation (10, 10', 10") according to any of Claims 1 to 9, **characterized in that** a further check valve (23) is arranged in a pneumatic feed line (20) between a compressor chamber (21.3) of a compressor (21.2) and the compressed air connection (1), and opens automatically in the direction of the compressed air connection (1).

11. Compressed air supply installation (10, 10', 10") according to any of Claims 1 to 10, **characterized in that** a control line (120) branches between a compressor chamber (21.3) of a compressor (21.2) and the further check valve (23).

12. Compressed air supply installation (10, 10', 10") according to any of Claims 1 to 11, **characterized in that** in non-activated state of the valve assembly (40, 40',40"), the compressor (21.2) can be operated to produce a control pressure for the pressure control connection (71S), wherein the control pressure is sufficient for automatic opening of a check valve (122) and/or an outlet valve (22.0) and/or a connection valve (22) .

13. Compressed air supply installation (10, 10', 10") according to any of Claims 1 to 12, **characterized in that** a check valve (122) and/or an outlet valve (22.0) and/or a connection valve (22) is formed statically open such that when the compressor (21.2) is not in operation, the control line (120) can be purged in the blocking direction of the check valve.

14. Compressed air supply installation (10, 10', 10") according to any of Claims 1 to 13, **characterized in that** a purge choke (121) is arranged in a bypass line (123) bypassing a counter-valve (122, 22, 22.0) with check function, through which line choke air can flow in the blocking direction of the counter-valve with check function.

15. Compressed air supply installation (10, 10', 10") according to any of Claims 1 to 14, **characterized in that** the bypass line (123, 123') bypassing the check valve (122, 122G) and/or the outlet valve (22) is formed
- as a parallel line to the control line (120) and connects to this on both sides, or
- as a branch line to the control line (120) and connects to this on one side.

16. Compressed air supply installation (10, 10', 10") according to any of Claims 1 to 15, **characterized in that** the at least one bypass line (123, 123') bypassing a check valve and/or an outlet valve (22.0)
- is formed as a parallel line to a pneumatic feed line (20) which runs between a compressor chamber (21.3) of a compressor (21.2) and the compressed air connection (1), and the bypass line (123, 123') connects to the feed line (20) at least on one side,
- at least one bypass line (123, 123') is formed as a parallel line to a compressor chamber (21.3) of a compressor (21.2), and preferably connects to the feed line (20) on both sides.

17. Compressed air supply installation (10, 10', 10") according to any of Claims 1 to 16, **characterized in that** the at least one bypass line (123, 123') bypassing a check valve and/or an outlet valve (22.0) is formed as a parallel line to an outlet valve (22) of a compressor chamber (21.3) of a compressor (21.2), and preferably connects to a feed line (20) at least on one side or on both sides.

18. Compressed air supply installation (10, 10', 10") according to any of Claims 1 to 17, **characterized in that** a check valve (122) and/or outlet valve (22) is dynamically closed such that when the compressor (21.2) is in operation, a control pressure is maintained, and even when air flows through the purge choke (121) against the blocking direction of the check valve (122) and/or outlet valve (22), is sufficient for automatic opening of a check valve (22; 122) against this blocking direction.

19. Compressed air supply installation (10, 10', 10") according to any of Claims 1 to 18, **characterized by**
- a first choke (64), wherein the first choke (64) is arranged directly in the pneumatic main line (60) or a parallel line connected thereto between the air dryer (61) and the compressed air connection (2), and/or
- a second choke (74), wherein the second choke (74) is arranged in the purge line (70) or in a branch line directly connected to the purge line (70) between the compressed air feed (1) and the purge valve (71), and/or
- a further choke (121, 121') in a bypass line (123, 123') and a counter-valve with check function connected parallel to the bypass line (123, 123') .

20. Pneumatic system (100, 100', 100") with the compressed air supply installation according to any of Claims 1 to 19, and a pneumatic installation (90, 90', 90") formed as an air spring installation which comprises a gallery (95) and at least one branch line (91L, 92L) pneumatically connected to the gallery (95) with at least one bellows (91) and a pressure accumulator (92) and at least one directional valve (93, 94) arranged upstream of the bellows (91) and/or the pressure accumulator (92).

21. Method for controlling a compressed air supply installation according to any of the preceding Claims 1 to 18 for operation of a pneumatic installation, namely an air spring installation of a vehicle, **characterized in that** the method for operating the compressed air supply installation (10, 10', 10") and/or the pneumatic installation (90, 90') comprises the steps:
- opening of the purge valve (71) in non-activated state of the valve assembly (40, 40', 40");
- closure of the purge valve (71) by pneumatic loading of the valve assembly (40, 40', 40") with a control pressure derived directly from the air compressor (21), which control pressure can be derived from a control line (120) connected directly to the air compressor (21), wherein
- to open the purge valve (71), a check valve (22; 122), namely a check valve (122) arranged in the control line (120) and/or an outlet valve (22) of the compressor (21.2), is formed statically open such that when the compressor (21.2) is not in operation, a control line (120) is purged in the blocking direction of the check valve (122), and/or
- to close the purge valve (71), a check valve (122) and/or outlet valve (22), namely a check valve (122) arranged in the control line (120) and/or an outlet valve (22) of the compressor (21.2), is dynamically closed such that when the compressor (21.2) is in operation, a control pressure must be maintained.

22. Method according to Claim 21, **characterized in that** the control pressure maintained, even when air flows through the purge choke against the blocking direction of the check valve (122) and/or outlet valve (22), is sufficient for automatic opening of a counter-valve with check function, namely of the check valve (122) and/or outlet valve (22.0) and/or connection valve (22), against its blocking direction.

## Revendications

1. Installation d'alimentation en air comprimé (10, 10', 10") pour faire fonctionner une installation pneumatique (90, 90', 90"), à savoir une installation de ressort pneumatique d'un véhicule, présentant :
- une alimentation en air avec un compresseur d'air (21) pour l'alimentation d'une alimentation en air comprimé (1) en air comprimé,
- une conduite principale pneumatique (60), avec un sécheur d'air (61) et un raccord d'air comprimé (2) pour l'alimentation de l'installation pneumatique (90, 90', 90") en air comprimé,
- une conduite de désaérage (70), à savoir une conduite de désaérage (70) partant de la conduite principale pneumatique (60) au niveau de l'alimentation en air comprimé (1), présentant une soupape de désaérage (71) raccordée dans la conduite de désaérage (70), et un raccord de désaérage (3) pour l'évacuation d'air vers l'environnement, la soupape de désaérage (71) faisant partie d'un agencement de soupapes commandable (40, 40', 40"),
**caractérisée en ce que**
- la soupape de désaérage (71) et/ou l'agencement de soupapes (40, 40', 40") avec au moins la soupape de désaérage (71) peuvent être sollicités pneumatiquement avec une pression de commande dérivée du compresseur d'air (21), et
- une partie pneumatique (71P) de la soupape de désaérage (71) comprend un piston de soupape qui peut être sollicité avec une pression de commande s'appliquant au niveau du raccord de commande de pression (71S), qui peut être dérivée d'une conduite de commande (120) raccordée directement au compresseur d'air (21) .

2. Installation d'alimentation en air comprimé (10, 10', 10") selon la revendication 1,
**caractérisée en ce que**
- dans un état non sollicité en pression de l'agencement de soupapes (40, 40G, 40', 40"), la soupape de désaérage (71) est ouverte, une partie pneumatique (71P) de la soupape de désaérage (71) dans la conduite de désaérage (70) pouvant être actionnée étant ouverte dans l'état non commandé de la soupape de désaérage (71) entre un raccord de soupape côté pression (X) et un raccord de soupape côté désaérage (Y), de telle sorte que, dans l'état non commandé de la soupape de désaérage (71), la soupape de désaérage (71) soit ouverte, afin de commuter la conduite de désaérage (70) vers le raccord de désaérage (3), et
- la soupape de désaérage (71) peut être commandée pneumatiquement avec une pression de commande directement dérivée du compresseur d'air (21) afin de bloquer la conduite de désaérage (70) par rapport au raccord de désaérage (3),
- la pression de commande peut être fournie dans une conduite de commande (120) directement entre une chambre de compresseur (21.3) du compresseur d'air (21) et un raccord de commande de pression (71S) vers une partie pneumatique (71P) de la soupape de désaérage (71) .

3. Installation d'alimentation en air comprimé (10, 10', 10") selon la revendication 1 ou 2, **caractérisée en ce que**
- une pression de commande peut être fournie dans une conduite de commande (120) directement entre une chambre de compresseur (21.3) du compresseur d'air (21) et un raccord de commande de pression (71S) vers une partie pneumatique (71P) de la soupape de désaérage (71), dans la direction d'une force d'un ressort de soupape (76), et/ou
- une contre-pression de commande peut être fournie dans une conduite de contre-pression de commande (160) entre la conduite principale pneumatique (60) et un raccord de contre-pression de commande (71A) vers une partie pneumatique (71P) de la soupape de désaérage (71), à l'encontre de la direction d'une force d'un ressort de soupape (76).

4. Installation d'alimentation en air comprimé (10, 10', 10") selon l'une quelconque des revendications 1 à 3,
**caractérisée en ce qu'**une partie pneumatique (71P) de la soupape de désaérage (71) est formée sous la forme d'une soupape à 2/2 voies et la soupape de désaérage (71) présente un raccord de commande de pression (71S) au niveau duquel est raccordée directement une conduite de commande (120) pour le guidage de la pression de commande.

5. Installation d'alimentation en air comprimé (10, 10', 10") selon l'une quelconque des revendications 1 à 4,
**caractérisée en ce que** la soupape de désaérage (71) est réalisée de manière à permettre une commutation commandée pneumatiquement d'un volume d'air comprimé de la conduite de désaérage (70), l'agencement de soupapes comprenant la soupape de désaérage (71) dans la conduite de désaérage (70) et un clapet d'étranglement (121) dans une conduite de dérivation (123, 123') et une soupape de retenue raccordée en parallèle à la conduite de dérivation (123, 123') avec une fonction antiretour, la soupape de retenue avec fonction antiretour comprenant une soupape de sortie (22.0) dans une conduite d'alimentation (20) et/ou une soupape de raccordement (22) dans une conduite de commande (120) et/ou un clapet antiretour (122) dans une conduite de commande (120).

6. Installation d'alimentation en air comprimé (10, 10', 10") selon l'une quelconque des revendications 1 à 5, **caractérisé en ce que** le compresseur d'air (21) présente un compresseur (21.2) avec au moins une chambre de compresseur (21.3), une conduite de commande (120) étant raccordée indirectement par le biais de l'alimentation en air comprimé (1) ou directement par le biais d'une soupape de sortie (22.0) et/ou d'une soupape de raccordement (22) à une chambre de compresseur (21.3) du compresseur (21.2).

7. Installation d'alimentation en air comprimé (10, 10', 10") selon l'une quelconque des revendications 1 à 5, **caractérisée en ce que** l'agencement de soupapes (40, 40', 40") présente, en plus de la soupape de désaérage (71), un clapet antiretour (122, 23) ou une soupape de retenue similaire avec une fonction de clapet antiretour, ou une soupape de sortie (22.0) et/ou une soupape de raccordement (22) du compresseur d'air (21), par le biais duquel ou de laquelle le raccord de commande de pression (715) de la soupape de désaérage (71) peut être sollicité avec une pression de commande dans une direction d'ouverture automatique.

8. Installation d'alimentation en air comprimé (10, 10', 10") selon l'une quelconque des revendications 1 à 7, **caractérisée en ce qu'**un clapet antiretour (122) de l'agencement de soupapes (40, 40') est disposé dans la conduite de commande (120).

9. Installation d'alimentation en air comprimé (10, 10', 10") selon l'une quelconque des revendications 1 à 8, **caractérisée en ce qu'**une chambre de compresseur (21.3) d'un compresseur (21.2) présente la soupape de retenue avec fonction antiretour, à savoir une soupape de sortie (22.0) et/ou une soupape de raccordement (22), une soupape de raccordement (22) dans une conduite de commande (120), en plus d'une soupape de sortie (22.0) dans une conduite d'alimentation (20), reprenant de préférence la fonction d'un clapet antiretour (122) de l'agencement de soupapes (40").

10. Installation d'alimentation en air comprimé (10, 10', 10") selon l'une quelconque des revendications 1 à 9, **caractérisée en ce qu'**un clapet antiretour supplémentaire (23) est disposé dans une conduite d'alimentation pneumatique (20) entre une chambre de compresseur (21.3) d'un compresseur (21.2) et le raccord d'air sous pression (1) et s'ouvre automatiquement dans la direction du raccord d'air sous pression (1).

11. Installation d'alimentation en air comprimé (10, 10', 10") selon l'une quelconque des revendications 1 à 10, **caractérisée en ce qu'**une conduite de commande (120) s'embranche entre une chambre de compresseur (21.3) d'un compresseur (21.2) et le clapet antiretour supplémentaire (23) .

12. Installation d'alimentation en air comprimé (10, 10', 10") selon l'une quelconque des revendications 1 à 11, **caractérisée en ce que** dans l'état commandé de l'agencement de soupapes (40, 40', 40"), le compresseur (21.2) peut fonctionner en générant une pression de commande pour le raccord de commande de pression (71S), la pression de commande suffisant pour l'ouverture automatique d'un clapet antiretour (122) et/ou d'une soupape de sortie (22.0) et/ou d'une soupape de raccordement (22).

13. Installation d'alimentation en air comprimé (10, 10', 10") selon l'une quelconque des revendications 1 à 12, **caractérisée en ce qu'**un clapet antiretour (122) et/ou une soupape de sortie (22.0) et/ou une soupape de raccordement (22), sont réalisés sous forme statiquement ouverte de telle sorte que lorsque le compresseur (21.2) ne fonctionne pas, un désaérage de la conduite de commande (120) dans le sens de blocage du clapet antiretour soit possible.

14. Installation d'alimentation en air comprimé (10, 10', 10") selon l'une quelconque des revendications 1 à 13, **caractérisée en ce qu'**un clapet d'étranglement (121) est disposé dans une conduite de dérivation (123) contournant une soupape de retenue (122, 22, 22.0) avec fonction antiretour, qui peut être parcourue par l'écoulement dans le sens de blocage de la soupape de retenue avec fonction antiretour.

15. Installation d'alimentation en air comprimé (10, 10', 10") selon l'une quelconque des revendications 1 à 14, **caractérisée en ce que** la conduite de dérivation (123, 123') contournant le clapet antiretour (122, 122G) et/ou la soupape de sortie (22)
- est formée sous forme de conduite parallèle à la conduite de commande (120) et se raccorde des deux côtés à celle-ci, ou
- est formée en tant que conduite de branchement pour la conduite de commande (120) et se raccorde d'un côté à celle-ci.

16. Installation d'alimentation en air comprimé (10, 10', 10") selon l'une quelconque des revendications 1 à 15, **caractérisée en ce que** l'au moins une conduite de dérivation (123, 123') contournant un clapet antiretour et/ou une soupape de sortie (22.0)
- est formée en tant que conduite parallèle à une conduite d'alimentation pneumatique (20) qui s'étend entre une chambre de compresseur (21.3) d'un compresseur (21.2) et le raccord d'air comprimé (1), et la conduite de dérivation (123, 123') se raccorde au moins d'un côté à la conduite d'alimentation (20),
- au moins une conduite de dérivation (123, 123') étant formée en tant que conduite parallèle à une chambre de compresseur (21.3) d'un compresseur (21.2), de préférence se raccordant des deux côtés à la conduite d'alimentation (20) .

17. Installation d'alimentation en air comprimé (10, 10', 10") selon l'une quelconque des revendications 1 à 16, **caractérisée en ce que** l'au moins une conduite de dérivation (123, 123') contournant un clapet antiretour et/ou une soupape de sortie (22.0) est formée en tant que conduite parallèle à une soupape de sortie (22) d'une chambre de compresseur (21.3) d'un compresseur (21.2), de préférence se raccorde à une conduite d'alimentation (20) au moins d'un côté ou des deux côtés.

18. Installation d'alimentation en air comprimé (10, 10', 10") selon l'une quelconque des revendications 1 à 17, **caractérisée en ce qu'**un clapet antiretour (122) et/ou une soupape de sortie (22) sont fermés dynamiquement de telle sorte que, lorsque le compresseur (21.2) fonctionne, une commande pression de commande doive être maintenue et soit même suffisante, dans le cas d'un clapet d'étranglement de désaérage (121) parcouru par l'écoulement à l'encontre du sens de blocage du clapet antiretour (122) et/ou de la soupape de sortie (22), pour permettre l'ouverture automatique d'un clapet antiretour (22 ; 122) à l'encontre de son sens de blocage.

19. Installation d'alimentation en air comprimé (10, 10', 10") selon l'une quelconque des revendications 1 à 18, **caractérisée par**
- un premier clapet d'étranglement (64), le premier clapet d'étranglement (64) étant disposé directement dans la conduite principale pneumatique (60) ou dans une conduite parallèle connectée à celle-ci entre le sécheur d'air (61) et le raccord d'air comprimé (2), et/ou
- un deuxième clapet d'étranglement (74), le deuxième clapet d'étranglement (74) étant disposé dans la conduite de désaérage (70) ou dans une conduite de branchement connectée directement à la conduite de désaérage (70) entre l'alimentation en air comprimé (1) et la soupape de désaérage (71) et/ou
- un clapet d'étranglement supplémentaire (121, 121') dans une conduite de dérivation (123, 123') et une soupape de retenue avec fonction antiretour raccordée en parallèle à la conduite de dérivation (123, 123').

20. Système pneumatique (100, 100', 100") comprenant l'installation d'alimentation en air comprimé selon l'une quelconque des revendications 1 à 19 et une installation pneumatique (90, 90', 90") qui est formée sous la forme d'une installation à ressort pneumatique qui présente une galerie (95) et au moins une conduite d'embranchement (91L, 92L) raccordée pneumatiquement à la galerie (95) avec au moins un soufflet (91) et un accumulateur de pression (92) ainsi qu'au moins un distributeur (93, 94) monté en amont du soufflet (91) et/ou de l'accumulateur de pression (92).

21. Procédé pour commander une installation d'alimentation en air comprimé selon l'une quelconque des revendications 1 à 18 pour faire fonctionner une installation pneumatique, à savoir une installation de ressort pneumatique d'un véhicule, **caractérisé en ce que** le procédé pour faire fonctionner l'installation d'alimentation en air comprimé (10, 10', 10") et/ou l'installation pneumatique (90, 90') présentent les étapes suivantes :
- ouverture de la soupape de désaérage (71) dans l'état non commandé de l'agencement de soupapes (40, 40', 40") ;
- fermeture de la soupape de désaérage (71) par sollicitation pneumatique de l'agencement de soupapes (40, 40', 40") par le biais d'une pression de commande dérivée directement du compresseur d'air (21), qui peut être dérivée d'une conduite de commande (120) raccordée directement au compresseur d'air (21),
- pour l'ouverture de la soupape de désaérage (71), un clapet antiretour (22 ; 122), à savoir un clapet antiretour (122) disposé dans la conduite de commande (120) et/ou une soupape de sortie (22) du compresseur (21.2) étant formés de manière à être ouverts statiquement de telle sorte que lorsque le compresseur (21.2) ne fonctionne pas, une conduite de commande (120) soit désaérée dans le sens de blocage du clapet antiretour (122) et/ou
- pour la fermeture de la soupape de désaérage (71), un clapet antiretour (122) et/ou une soupape de sortie (22), à savoir un clapet antiretour (122) disposé dans la conduite de commande (120) et/ou une soupape de sortie (22) du compresseur (21.2), étant fermés dynamiquement de telle sorte que lorsque le compresseur (21.2) fonctionne, une pression de commande doive être maintenue.

22. Procédé selon la revendication 21, **caractérisé en ce que** la pression de commande maintenue, même dans le cas d'un clapet d'étranglement de désaérage parcouru par l'écoulement à l'encontre du sens de blocage du clapet antiretour (122) et/ou de la soupape de sortie (22), suffit pour l'ouverture automatique d'une soupape de retenue avec fonction antiretour, à savoir du clapet antiretour (122) et/ou de la soupape de sortie (22.0) et/ou de la soupape de raccordement (22), à l'encontre de son sens de blocage.
